# EUROPEAN PATENT SPECIFICATION

(11) **EP 4 558 845 B1**
(45) Date of publication and mention of the grant of the patent: **23.09.2026**
(21) Application number: 23745140.6
(22) Date of filing: 20.07.2023
(51) Int. Cl.: G01T 1/17, H04N 5/00

(54) **SYSTEM AND METHOD FOR COUNTING PARTICLES ON A DETECTOR DURING INSPECTION**
SYSTEM UND VERFAHREN ZUM ZÄHLEN VON PARTIKELN AUF EINEM DETEKTOR WÄHREND DER INSPEKTION
SYSTÈME ET PROCÉDÉ DE COMPTAGE DE PARTICULES SUR DÉTECTEUR PENDANT L'INSPECTION

(30) Priority: 21.07.2022 US 202263391200 P; 28.03.2023 US 202363455251 P
(43) Date of publication of application: 28.05.2025
(73) Proprietor: ASML Netherlands B.V., 5500 AH Veldhoven (NL)
(72) Inventor: JANSEN, Sven, 5500 AH Veldhoven (NL); RAMACHANDRA RAO, Padmakumar, 5500 AH Veldhoven (NL); PELLEMANS, Henricus Petrus Maria, 5500 AH Veldhoven (NL)
(74) Representative: ASML Netherlands B.V.
(86) International application number: PCT/EP2023/070234
(87) International publication number: WO 2024/018038

(56) References cited:
- EP-B1- 0 763 302
- US-A1- 2016 241 795
- US-B1- 9 380 245

## Description

### RELATED APPLICATIONS

This application claims priority of US application number 63/391,200, filed July 21,2022, and US application number 63/455,251, filed March 28, 2023.

### FIELD

The description herein relates to the field of inspection systems, and more particularly to systems for counting particles on a detector during inspection.

### BACKGROUND

In manufacturing processes of integrated circuits (ICs), unfinished or finished circuit components are inspected to ensure that they are manufactured according to design and are free of defects. An inspection system utilizing an optical microscope typically has resolution down to a few hundred nanometers; and the resolution is limited by the wavelength of light. As the physical sizes of IC components continue to reduce down to sub-100 or even sub-10 nanometers, inspection systems capable of higher resolution than those utilizing optical microscopes are needed.

A charged particle (e.g., electron) beam microscope, such as a scanning electron microscope (SEM) or a transmission electron microscope (TEM), capable of resolution down to less than a nanometer, serves as a practicable tool for inspecting IC components having a feature size that is sub-100 nanometers. With a SEM, electrons of a single primary electron beam, or electrons of a plurality of primary electron beams, can be focused at locations of interest of a wafer under inspection. The primary electrons interact with the wafer and may be backscattered or may cause the wafer to emit secondary electrons. The intensity of the electron beams comprising the backscattered electrons and the secondary electrons may vary based on the properties of the internal and external structures of the wafer, and thereby may indicate whether the wafer has defects. EP 0763302 B1 discloses a detector comprising a plurality of detection elements configured to generate an electrical signal in response to an incident particle wherein each detection element also comprises a current source configured to drive a current in response to the electrical signal. The outputs from the current sources are sequentially multiplexed to a single analog-to-digital converter configured to convert the current to a digital value that is indicative of the electrical signals output by the plurality of detection elements. US 9380245 B1 discloses a detector comprising a plurality of detection elements configured to generate an electrical signal in response to an incident particle wherein each detection element also comprises a current source configured to drive a current in response to the electrical signal, where the output of the current source is connected to enable summing of the current output by the current source to create a summed current, the plurality of detection elements being connected to a respective plurality of current sources, and an analog-to-digital converter configured to convert the summed current to a digital value that is indicative of the electrical signals output by the plurality of detection elements. US 2016/241795 A1 discloses a detector comprising a plurality of detection elements configured to generate an electrical signal in response to an incident particle. The outputs from a plurality of the detection elements is summed and out put to an analog-to-digital converter configured to convert the summed current to a digital value that is indicative of the electrical signals output by the plurality of detection elements.

### SUMMARY

Embodiments of the present disclosure provide apparatuses, systems, and methods for counting particles on a detector. The present invention relates to a detector according to claim 1, a non-transitory computer readable medium according to claim 14 and a system according to claim 15.

### BRIEF DESCRIPTION OF THE DRAWINGS

**Fig. 1** is a schematic diagram illustrating an exemplary electron beam inspection (EBI) system, consistent with embodiments of the present disclosure.
**Fig. 2A** is a schematic diagram illustrating an exemplary multi-beam system that is part of the exemplary charged particle beam inspection system of **Fig. 1****,** consistent with embodiments of the present disclosure.
**Fig. 2B** is a schematic diagram illustrating an exemplary single-beam system that is part of the exemplary charged particle beam inspection system of **Fig. 1****,** consistent with embodiments of the present disclosure.
**Fig. 3A** is a schematic representation of an exemplary structure of a detector, consistent with embodiments of the present disclosure.
**Fig. 3B** is a schematic illustration of a cross-sectional structure of a substrate of a detector, consistent with embodiments of the present disclosure.
**Fig. 3C** is a schematic illustration of a cross-sectional structure of a substrate of a detector, consistent with embodiments of the present disclosure.
**Fig. 3D** is a schematic illustration of an individual detection element, consistent with embodiments of the present disclosure.
**Fig. 3E** is a schematic illustration of an individual detection element, consistent with embodiments of the present disclosure.
**Fig. 4A** is an exemplary circuit diagram of an exemplary detection element, consistent with embodiments of the present disclosure.
**Fig. 4B** is an exemplary circuit diagram of an exemplary plurality of detection elements, which is useful for understanding but does not form part of the presently claimed invention
**Fig. 4C** is an exemplary circuit diagram of an exemplary plurality of detection elements, consistent with embodiments of the present disclosure.
**Fig. 5A** is a schematic representation of an exemplary structure of a detector, consistent with embodiments of the present disclosure.
**Fig. 5B** is an exemplary circuit diagram of **Fig. 5A****,** consistent with embodiments of the present disclosure.
**Fig. 5C** is an exemplary circuit diagram of an exemplary plurality of detection elements, consistent with embodiments of the present disclosure.
**Fig. 6** is an exemplary circuit diagram of an exemplary plurality of detection elements, consistent with embodiments of the present disclosure.
**Fig. 7** is a flowchart illustrating an exemplary process of counting particles on a detector, consistent with embodiments of the present disclosure.
**Fig. 8** is a schematic diagram illustrating an exemplary an exemplary level sensor, consistent with embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the subject matter recited in the appended claims. For example, although some embodiments are described in the context of utilizing electron beams, the disclosure is not so limited. Other types of charged particle beams may be similarly applied. Furthermore, other imaging systems may be used, such as optical imaging, photodetection, x-ray detection, extreme ultraviolet inspection, deep ultraviolet inspection, or the like, in which they generate corresponding types of images.

Electronic devices are constructed of circuits formed on a piece of silicon called a substrate. Many circuits may be formed together on the same piece of silicon and are called integrated circuits or ICs. The size of these circuits has decreased dramatically so that many more of them can fit on the substrate. For example, an IC chip in a smart phone can be as small as a thumbnail and yet may include over 2 billion transistors, the size of each transistor being less than 1/1000^{th} the size of a human hair.

Making these extremely small ICs is a complex, time-consuming, and expensive process, often involving hundreds of individual steps. Errors in even one step have the potential to result in defects in the finished IC rendering it useless. Thus, one goal of the manufacturing process is to avoid such defects to maximize the number of functional ICs made in the process, that is, to improve the overall yield of the process.

One component of improving yield is monitoring the chip making process to ensure that it is producing a sufficient number of functional integrated circuits. One way to monitor the process is to inspect the chip circuit structures at various stages of their formation. Inspection may be carried out using a scanning electron microscope (SEM). A SEM can be used to image these extremely small structures, in effect, taking a "picture" of the structures of the wafer. The image can be used to determine if the structure was formed properly and also if it was formed at the proper location. If the structure is defective, then the process can be adjusted so the defect is less likely to recur. Defects may be generated during various stages of semiconductor processing. For the reason stated above, it is important to find defects accurately and efficiently as early as possible.

The working principle of a SEM is similar to a camera. A camera takes a picture by receiving and recording brightness and colors of light reflected or emitted from people or objects. A SEM takes a "picture" by receiving and recording energies or quantities of electrons reflected or emitted from the structures. Before taking such a "picture," an electron beam may be provided onto the structures, and when the electrons are reflected or emitted ("exiting") from the structures, a detector of the SEM may receive and record the energies or quantities of those electrons to generate an image. To take such a "picture," some SEMs use a single electron beam (referred to as a "single-beam SEM"), while some SEMs use multiple electron beams (referred to as a "multi-beam SEM") to take multiple "pictures" of the wafer. By using multiple electron beams, the SEM may provide more electron beams onto the structures for obtaining these multiple "pictures," resulting in more electrons exiting from the structures. Accordingly, the detector may receive more exiting electrons simultaneously, and generate images of the structures of the wafer with a higher efficiency and a faster speed.

For example, typical detectors may be pixelated (e.g., including a plurality of detection elements) such that each detection element may receive a particle (e.g., photons, charged particles such as electrons, protons, etc.) projected from a sample and output a detection signal. Detection signals can be used to reconstruct images of sample structures under inspection and may be used, for example, to reveal defects in the sample.

A detection system may include a controller that may be configured to determine that particles are incident on one or more detection elements of a detector. The controller may be configured to determine a number of particles incident on the detection elements of the detector within a frame. For example, the controller may perform particle counting, such as electron counting, as described in U.S. Patent No. 11,508,547, which is incorporated herein by reference in its entirety. Particle counting may be performed frame-by-frame. The detector may be configured such that individual detection elements output a detection signal on a timewise basis. The detection signal may be transmitted to the controller.

The controller may determine, based on the detection signal, that a discrete number of particles arrive at a detection element. The circuit of the detector may be configured to process outputs from the plurality of detection elements and increment a counter in response to a particle arrival event on a detection element of the detector. For example, the circuit of a detection element may output a "1" when a particle is incident on the detection element and may output a "0" when a particle is not incident on the detection element within some time span. The circuit of a typical detector may determine the total number of particles incident on the detector by counting the number of "1" outputs from the detection elements. By counting the number of particles received on the detector, the intensity of an incoming beam may be determined and may be used to obtain spatial sample data and generate an image (e.g., a grayscale image).

Typical detection systems, however, suffer from constraints. Typical inspection systems may include large detector pixel arrays (e.g., 1,000 detection elements or more on a detector) and may require obtaining frames at a high frame rate (e.g., > 100 MHz). Digitally counting the total number of particles received on a detector may require long time spans, increase power consumption, and not be realizable at a high frame rate (e.g., the maximum time to count a detector pixel array with 7,000 pixels at 300 MHz may only be 3 ns).

Typical detection systems may also be unable to accommodate a high dynamic range of particles. That is, typical detection systems may not be able to accurately measure a range covering a low particle flux to a high particle flux. These typical detection systems may also be unable to accurately count the number of particles received on a detector, especially particles that generate lower electrical signals (e.g., photons). Additionally, typical detection systems suffer from counting particles at lower rates, thereby resulting in lower accuracy of counting particles.

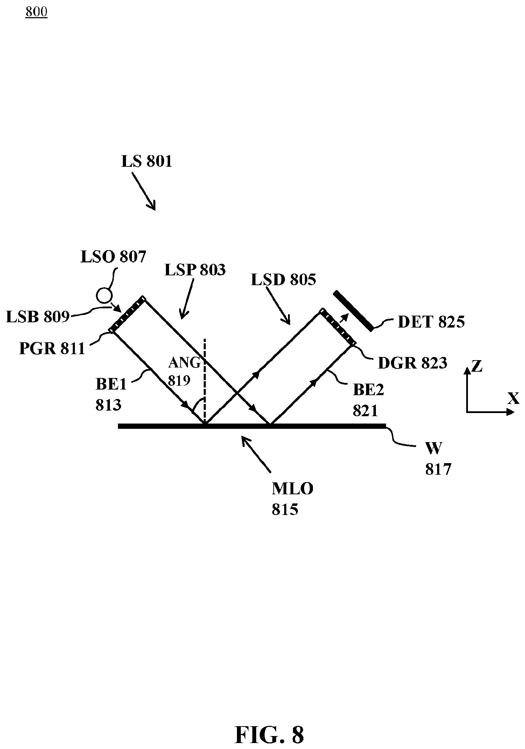

These constraints of typical detection systems may also negatively affect systems that include detection systems. For example, the constraints of typical detection systems may negatively affect alignment techniques or systems used in lithographic apparatuses and processes, as described in U.S. Patent Nos. 9,927,726, 7,440,079, and 6,628,406, which are incorporated by reference in their entirety. The constraints of typical detection systems may also negatively affect level sensors or height sensors, as described below with respect to **Fig. 8****,** that use detection systems.

Some of the disclosed embodiments provide systems and methods that address some or all of these disadvantages by counting particles on a pixelated detector in an analog manner using the driven current of detection elements. The disclosed embodiments may include driving a current in a current source associated with a detection element when a particle is incident on the detection element, determining a sum of driven current of the plurality of current sources associated with a pixelated detector, and determining a total number of particles incident on the pixelated detector based on the determined sum of driven current, thereby counting particles on a pixelated detector in an analog manner at a high frame rate, with reduced power consumption, increased accuracy, reduced electrical signal phase lag (e.g., higher phase stability), and in a manner that is scalable.

The disclosed embodiments include using a detection element with a discriminator that can output stepped integer values or real analog values, which allows the architecture of a detector to be moved to silicon, thereby reducing the capacitor per detection element, reducing the overall noise, and increasing the rate at which the detector can count particles. Moreover, using a detector with the above-described discriminator in each detection element may accommodate counting a high dynamic range of particles at higher accuracy.

The disclosed embodiments include using a detection element with an ADC connected to a plurality of bit lines to increase the speed and accuracy of particle counting on the detector compared to using a detection element with a single output.

The disclosed embodiments further increase particle counting accuracy and increase electrical signal phase stability in a detection system, thereby improving alignment systems and level sensors that use these detection systems.

Relative dimensions of components in drawings may be exaggerated for clarity. Within the following description of drawings, the same or like reference numbers refer to the same or like components or entities, and only the differences with respect to the individual embodiments are described.

As used herein, unless specifically stated otherwise, the term "or" encompasses all possible combinations, except where infeasible. For example, if it is stated that a component may include A or B, then, unless specifically stated otherwise or infeasible, the component may include A, or B, or A and B. As a second example, if it is stated that a component may include A, B, or C, then, unless specifically stated otherwise or infeasible, the component may include A, or B, or C, or A and B, or A and C, or B and C, or A and B and C.

Without limiting the scope of the present disclosure, some embodiments may be described in the context of providing detectors and detection methods in systems utilizing electron beams. However, the disclosure is not so limited. Other types of charged particle beams may be similarly applied. Furthermore, systems and methods for detection may be used in other imaging systems, such as optical imaging, photon detection, x-ray detection, ion detection, etc.

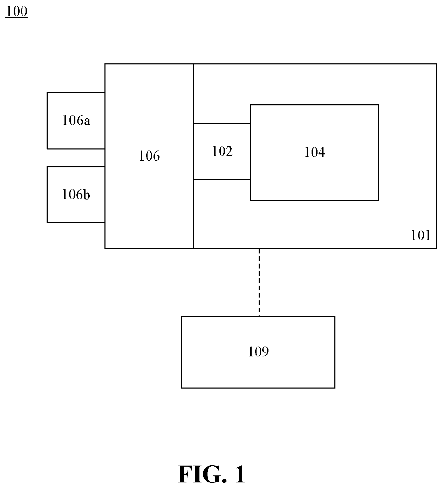

**Fig. 1** illustrates an exemplary electron beam inspection (EBI) system 100 consistent with embodiments of the present disclosure. EBI system 100 may be used for imaging. As shown in Fig. 1, EBI system 100 includes a main chamber 101, a load/lock chamber 102, an electron beam tool 104, and an equipment front end module (EFEM) 106. Electron beam tool 104 is located within main chamber 101. EFEM 106 includes a first loading port 106a and a second loading port 106b. EFEM 106 may include additional loading port(s). First loading port 106a and second loading port 106b receive wafer front opening unified pods (FOUPs) that contain wafers (e.g., semiconductor wafers or wafers made of other material(s)) or samples to be inspected (wafers and samples may be used interchangeably). A "lot" is a plurality of wafers that may be loaded for processing as a batch.

One or more robotic arms (not shown) in EFEM 106 may transport the wafers to load/lock chamber 102. Load/lock chamber 102 is connected to a load/lock vacuum pump system (not shown) which removes gas molecules in load/lock chamber 102 to reach a first pressure below the atmospheric pressure. After reaching the first pressure, one or more robotic arms (not shown) may transport the wafer from load/lock chamber 102 to main chamber 101. Main chamber 101 is connected to a main chamber vacuum pump system (not shown) which removes gas molecules in main chamber 101 to reach a second pressure below the first pressure. After reaching the second pressure, the wafer is subject to inspection by electron beam tool 104. Electron beam tool 104 may be a single-beam system or a multi-beam system.

A controller 109 is electronically connected to electron beam tool 104. Controller 109 may be a computer configured to execute various controls of EBI system 100. While controller 109 is shown in **Fig. 1** as being outside of the structure that includes main chamber 101, load/lock chamber 102, and EFEM 106, it is appreciated that controller 109 may be a part of the structure.

In some embodiments, controller 109 may include one or more processors (not shown). A processor may be a generic or specific electronic device capable of manipulating or processing information. For example, the processor may include any combination of any number of a central processing unit (or "CPU"), a graphics processing unit (or "GPU"), an optical processor, a programmable logic controllers, a microcontroller, a microprocessor, a digital signal processor, an intellectual property (IP) core, a Programmable Logic Array (PLA), a Programmable Array Logic (PAL), a Generic Array Logic (GAL), a Complex Programmable Logic Device (CPLD), a Field-Programmable Gate Array (FPGA), a System On Chip (SoC), an Application-Specific Integrated Circuit (ASIC), and any type circuit capable of data processing. The processor may also be a virtual processor that includes one or more processors distributed across multiple machines or devices coupled via a network.

In some embodiments, controller 109 may further include one or more memories (not shown). A memory may be a generic or specific electronic device capable of storing codes and data accessible by the processor (e.g., via a bus). For example, the memory may include any combination of any number of a random-access memory (RAM), a read-only memory (ROM), an optical disc, a magnetic disk, a hard drive, a solid-state drive, a flash drive, a security digital (SD) card, a memory stick, a compact flash (CF) card, or any type of storage device. The codes may include an operating system (OS) and one or more application programs (or "apps") for specific tasks. The memory may also be a virtual memory that includes one or more memories distributed across multiple machines or devices coupled via a network.

Embodiments of this disclosure may provide a single charged-particle beam imaging system ("single-beam system"). Compared with a single-beam system, a multiple charged-particle beam imaging system ("multi-beam system") may be designed to optimize throughput for different scan modes. Embodiments of this disclosure provide a multi-beam system with the capability of optimizing throughput for different scan modes by using beam arrays with different geometries and adapting to different throughputs and resolution requirements.

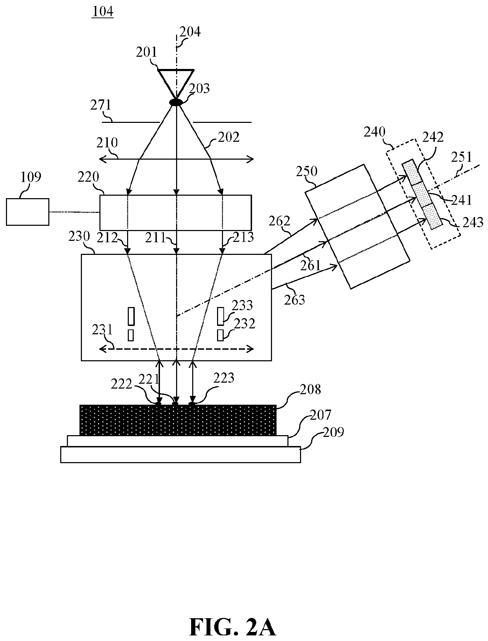

Reference is now made to **Fig. 2A****,** which is a schematic diagram illustrating an exemplary electron beam tool 104 including a multi-beam inspection tool that is part of the EBI system 100 of **Fig. 1****,** consistent with embodiments of the present disclosure. In some embodiments, electron beam tool 104 may be operated as a single-beam inspection tool that is part of EBI system 100 of **Fig. 1****.** Multi-beam electron beam tool 104 (also referred to herein as apparatus 104) comprises an electron source 201, a Coulomb aperture plate (or "gun aperture plate") 271, a condenser lens 210, a source conversion unit 220, a primary projection system 230, a motorized stage 209, and a sample holder 207 supported by motorized stage 209 to hold a sample 208 (e.g., a wafer or a photomask) to be inspected. Multi-beam electron beam tool 104 may further comprise a secondary projection system 250 and an electron detection device 240. Primary projection system 230 may comprise an objective lens 231. Electron detection device 240 may comprise a plurality of detection elements 241, 242, and 243. A beam separator 233 and a deflection scanning unit 232 may be positioned inside primary projection system 230.

Electron source 201, Coulomb aperture plate 271, condenser lens 210, source conversion unit 220, beam separator 233, deflection scanning unit 232, and primary projection system 230 may be aligned with a primary optical axis 204 of apparatus 104. Secondary projection system 250 and electron detection device 240 may be aligned with a secondary optical axis 251 of apparatus 104.

Electron source 201 may comprise a cathode (not shown) and an extractor or anode (not shown), in which, during operation, electron source 201 is configured to emit primary electrons from the cathode and the primary electrons are extracted or accelerated by the extractor and/or the anode to form a primary electron beam 202 that form a primary beam crossover (virtual or real) 203. Primary electron beam 202 may be visualized as being emitted from primary beam crossover 203.

Source conversion unit 220 may comprise an image-forming element array (not shown), an aberration compensator array (not shown), a beam-limit aperture array (not shown), and a pre-bending micro-deflector array (not shown). In some embodiments, the pre-bending micro-deflector array deflects a plurality of primary beamlets 211, 212, 213 of primary electron beam 202 to normally enter the beam-limit aperture array, the image-forming element array, and an aberration compensator array. In some embodiments, apparatus 104 may be operated as a single-beam system such that a single primary beamlet is generated. In some embodiments, condenser lens 210 is designed to focus primary electron beam 202 to become a parallel beam and be normally incident onto source conversion unit 220. The image-forming element array may comprise a plurality of micro-deflectors or micro-lenses to influence the plurality of primary beamlets 211, 212, 213 of primary electron beam 202 and to form a plurality of parallel images (virtual or real) of primary beam crossover 203, one for each of the primary beamlets 211, 212, and 213. In some embodiments, the aberration compensator array may comprise a field curvature compensator array (not shown) and an astigmatism compensator array (not shown). The field curvature compensator array may comprise a plurality of micro-lenses to compensate field curvature aberrations of the primary beamlets 211, 212, and 213. The astigmatism compensator array may comprise a plurality of micro-stigmators to compensate astigmatism aberrations of the primary beamlets 211, 212, and 213. The beam-limit aperture array may be configured to limit diameters of individual primary beamlets 211, 212, and 213. **Fig. 2A** shows three primary beamlets 211, 212, and 213 as an example, and it is appreciated that source conversion unit 220 may be configured to form any number of primary beamlets. Controller 109 may be connected to various parts of EBI system 100 of **Fig. 1****,** such as source conversion unit 220, electron detection device 240, primary projection system 230, or motorized stage 209. In some embodiments, as explained in further details below, controller 109 may perform various image and signal processing functions. Controller 109 may also generate various control signals to govern operations of the charged particle beam inspection system.

Condenser lens 210 is configured to focus primary electron beam 202. Condenser lens 210 may further be configured to adjust electric currents of primary beamlets 211, 212, and 213 downstream of source conversion unit 220 by varying the focusing power of condenser lens 210. Alternatively, the electric currents may be changed by altering the radial sizes of beam-limit apertures within the beam-limit aperture array corresponding to the individual primary beamlets. The electric currents may be changed by both altering the radial sizes of beam-limit apertures and the focusing power of condenser lens 210. Condenser lens 210 may be an adjustable condenser lens that may be configured so that the position of its first principle plane is movable. The adjustable condenser lens may be configured to be magnetic, which may result in off-axis beamlets 212 and 213 illuminating source conversion unit 220 with rotation angles. The rotation angles change with the focusing power or the position of the first principal plane of the adjustable condenser lens. Condenser lens 210 may be an anti-rotation condenser lens that may be configured to keep the rotation angles unchanged while the focusing power of condenser lens 210 is changed. In some embodiments, condenser lens 210 may be an adjustable anti-rotation condenser lens, in which the rotation angles do not change when its focusing power and the position of its first principal plane are varied.

Objective lens 231 may be configured to focus beamlets 211, 212, and 213 onto a sample 208 for inspection and may form, in the current embodiments, three probe spots 221, 222, and 223 on the surface of sample 208. Coulomb aperture plate 271, in operation, is configured to block off peripheral electrons of primary electron beam 202 to reduce Coulomb effect. The Coulomb effect may enlarge the size of each of probe spots 221, 222, and 223 of primary beamlets 211, 212, 213, and therefore deteriorate inspection resolution.

Beam separator 233 may, for example, be a Wien filter comprising an electrostatic deflector generating an electrostatic dipole field and a magnetic dipole field (not shown in **Fig. 2A****).** In operation, beam separator 233 may be configured to exert an electrostatic force by electrostatic dipole field on individual electrons of primary beamlets 211, 212, and 213. The electrostatic force is equal in magnitude but opposite in direction to the magnetic force exerted by magnetic dipole field of beam separator 233 on the individual electrons. Primary beamlets 211, 212, and 213 may therefore pass at least substantially straight through beam separator 233 with at least substantially zero deflection angles.

Deflection scanning unit 232, in operation, is configured to deflect primary beamlets 211, 212, and 213 to scan probe spots 221, 222, and 223 across individual scanning areas in a section of the surface of sample 208. In response to incidence of primary beamlets 211, 212, and 213 or probe spots 221, 222, and 223 on sample 208, electrons emerge from sample 208 and generate three secondary electron beams 261, 262, and 263. Each of secondary electron beams 261, 262, and 263 typically comprise secondary electrons (having electron energy ≤ 50eV) and backscattered electrons (having electron energy between 50eV and the landing energy of primary beamlets 211, 212, and 213). Beam separator 233 is configured to deflect secondary electron beams 261, 262, and 263 towards secondary projection system 250. Secondary projection system 250 subsequently focuses secondary electron beams 261, 262, and 263 onto detection elements 241, 242, and 243 of electron detection device 240. Detection elements 241, 242, and 243 are arranged to detect corresponding secondary electron beams 261, 262, and 263 and generate corresponding signals which are sent to controller 109 or a signal processing system (not shown), e.g., to construct images of the corresponding scanned areas of sample 208.

In some embodiments, detection elements 241, 242, and 243 detect corresponding secondary electron beams 261, 262, and 263, respectively, and generate corresponding intensity signal outputs (not shown) to an image processing system (e.g., controller 109). In some embodiments, each detection element 241, 242, and 243 may comprise one or more pixels. The intensity signal output of a detection element may be a sum of signals generated by all the pixels within the detection element.

In some embodiments, controller 109 may comprise image processing system that includes an image acquirer (not shown), a storage (not shown). The image acquirer may comprise one or more processors. For example, the image acquirer may comprise a computer, server, mainframe host, terminals, personal computer, any kind of mobile computing devices, and the like, or a combination thereof. The image acquirer may be communicatively coupled to electron detection device 240 of apparatus 104 through a medium such as an electrical conductor, optical fiber cable, portable storage media, IR, Bluetooth, internet, wireless network, wireless radio, among others, or a combination thereof. In some embodiments, the image acquirer may receive a signal from electron detection device 240 and may construct an image. The image acquirer may thus acquire images of sample 208. The image acquirer may also perform various post-processing functions, such as generating contours, superimposing indicators on an acquired image, and the like. The image acquirer may be configured to perform adjustments of brightness and contrast, etc. of acquired images. In some embodiments, the storage may be a storage medium such as a hard disk, flash drive, cloud storage, random access memory (RAM), other types of computer readable memory, and the like. The storage may be coupled with the image acquirer and may be used for saving scanned raw image data as original images, and post-processed images.

In some embodiments, the image acquirer may acquire one or more images of a sample based on an imaging signal received from electron detection device 240. An imaging signal may correspond to a scanning operation for conducting charged particle imaging. An acquired image may be a single image comprising a plurality of imaging areas. The single image may be stored in the storage. The single image may be an original image that may be divided into a plurality of regions. Each of the regions may comprise one imaging area containing a feature of sample 208. The acquired images may comprise multiple images of a single imaging area of sample 208 sampled multiple times over a time sequence. The multiple images may be stored in the storage. In some embodiments, controller 109 may be configured to perform image processing steps with the multiple images of the same location of sample 208.

In some embodiments, controller 109 may include measurement circuitries (e.g., analog-to-digital converters) to obtain a distribution of the detected secondary electrons. The electron distribution data collected during a detection time window, in combination with corresponding scan path data of each of primary beamlets 211, 212, and 213 incident on the wafer surface, can be used to reconstruct images of the wafer structures under inspection. The reconstructed images can be used to reveal various features of the internal or external structures of sample 208, and thereby can be used to reveal any defects that may exist in the wafer.

In some embodiments, controller 109 may control motorized stage 209 to move sample 208 during inspection of sample 208. In some embodiments, controller 109 may enable motorized stage 209 to move sample 208 in a direction continuously at a constant speed. In other embodiments, controller 109 may enable motorized stage 209 to change the speed of the movement of sample 208 over time depending on the steps of scanning process.

Although **Fig. 2A** shows that apparatus 104 uses three primary electron beams, it is appreciated that apparatus 104 may use one, two, or more number of primary electron beams. The present disclosure does not limit the number of primary electron beams used in apparatus 104. In some embodiments, apparatus 104 may be a SEM used for lithography. In some embodiments, electron beam tool 104 may be a single-beam system or a multi-beam system.

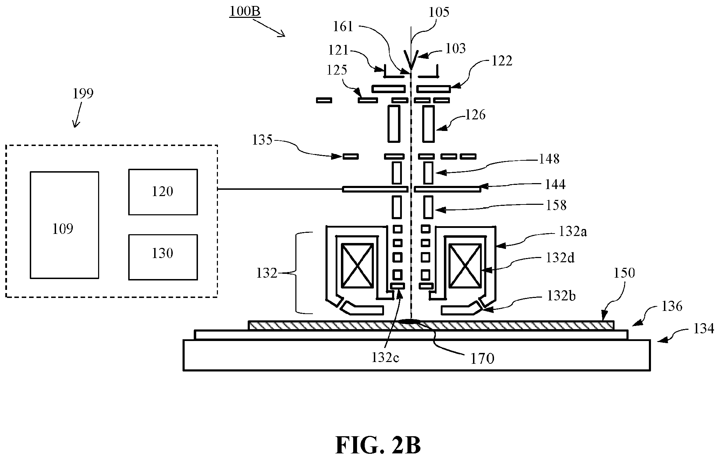

For example, as shown in **Fig. 2B****,** an electron beam tool 100B (also referred to herein as apparatus 100B) may be a single-beam inspection tool that is used in EBI system 10, consistent with embodiments of the present disclosure. Apparatus 100B includes a wafer holder 136 supported by motorized stage 134 to hold a wafer 150 to be inspected. Electron beam tool 100B includes an electron emitter, which may comprise a cathode 103, an anode 121, and a gun aperture 122. Electron beam tool 100B further includes a beam limit aperture 125, a condenser lens 126, a column aperture 135, an objective lens assembly 132, and a detector 144. Objective lens assembly 132, in some embodiments, may be a modified SORIL lens, which includes a pole piece 132a, a control electrode 132b, a deflector 132c, and an exciting coil 132d. In an imaging process, an electron beam 161 emanating from the tip of cathode 103 may be accelerated by anode 121 voltage, pass through gun aperture 122, beam limit aperture 125, condenser lens 126, and be focused into a probe spot 170 by the modified SORIL lens and impinge onto the surface of wafer 150. Probe spot 170 may be scanned across the surface of wafer 150 by a deflector, such as deflector 132c or other deflectors in the SORIL lens. Secondary or scattered primary particles, such as secondary electrons or scattered primary electrons emanated from the wafer surface may be collected by detector 144 to determine intensity of the beam and so that an image of an area of interest on wafer 150 may be reconstructed.

There may also be provided an image processing system 199 that includes an image acquirer 120, a storage 130, and controller 109. Image acquirer 120 may comprise one or more processors. For example, image acquirer 120 may comprise a computer, server, mainframe host, terminals, personal computer, any kind of mobile computing devices, and the like, or a combination thereof. Image acquirer 120 may connect with detector 144 of electron beam tool 100B through a medium such as an electrical conductor, optical fiber cable, portable storage media, IR, Bluetooth, internet, wireless network, wireless radio, or a combination thereof. Image acquirer 120 may receive a signal from detector 144 and may construct an image. Image acquirer 120 may thus acquire images of wafer 150. Image acquirer 120 may also perform various post-processing functions, such as generating contours, superimposing indicators on an acquired image, and the like. Image acquirer 120 may be configured to perform adjustments of brightness and contrast, etc. of acquired images. Storage 130 may be a storage medium such as a hard disk, random access memory (RAM), cloud storage, other types of computer readable memory, and the like. Storage 130 may be coupled with image acquirer 120 and may be used for saving scanned raw image data as original images, and post-processed images. Image acquirer 120 and storage 130 may be connected to controller 109. In some embodiments, image acquirer 120, storage 130, and controller 109 may be integrated together as one electronic control unit.

In some embodiments, image acquirer 120 may acquire one or more images of a sample based on an imaging signal received from detector 144. An imaging signal may correspond to a scanning operation for conducting charged particle imaging. An acquired image may be a single image comprising a plurality of imaging areas that may contain various features of wafer 150. The single image may be stored in storage 130. Imaging may be performed on the basis of imaging frames.

The condenser and illumination optics of the electron beam tool may comprise or be supplemented by electromagnetic quadrupole electron lenses. For example, as shown in Fig. 2B, electron beam tool 100B may comprise a first quadrupole lens 148 and a second quadrupole lens 158. In some embodiments, the quadrupole lenses are used for controlling the electron beam. For example, first quadrupole lens 148 can be controlled to adjust the beam current and second quadrupole lens 158 can be controlled to adjust the beam spot size and beam shape.

**Fig. 2B** illustrates a charged particle beam apparatus in which an inspection system may use a single primary beam that may be configured to generate secondary electrons by interacting with wafer 150. Detector 144 may be placed along optical axis 105, as in the embodiment shown in **Fig. 2B****.** The primary electron beam may be configured to travel along optical axis 105. Accordingly, detector 144 may include a hole at its center so that the primary electron beam may pass through to reach wafer 150.

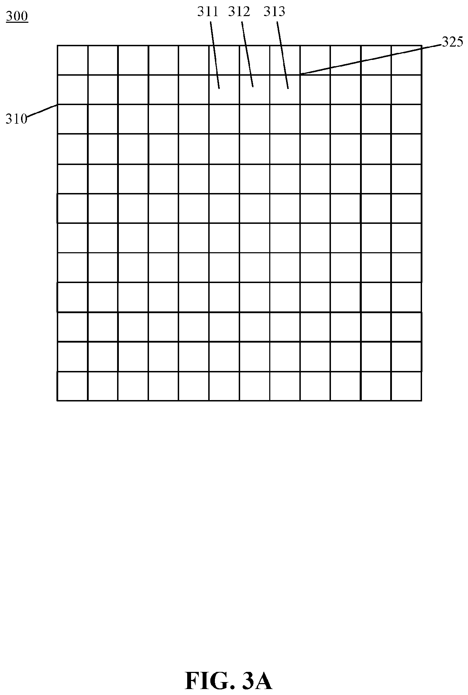

Reference is now made to **Fig. 3A****,** which illustrates a schematic representation of an exemplary structure of a detector 300, consistent with embodiments of the present disclosure. Detector 300 may be provided as detector 144 or electron detection device 240 with reference to **Fig. 2A** and **Fig. 2B****.** While one array is shown in **Fig. 3A****,** it is appreciated that detector 300 may include multiple arrays, such as one array for each secondary electron beam.

Detector 300 may comprise an array of detection elements, including detection elements 311, 312, and 313. The detection elements may be arranged in a planar, two-dimensional array, the plane of the array being substantially perpendicular to an incidence direction of incoming charged particles. In some embodiments, detector 300 may be arranged so as to be inclined relative to the incidence direction.

Detector 300 may comprise a substrate 310. Substrate 310 may be a semiconductor substrate that may include the detection elements. A detection element may be a diode. A detection element may also be an element similar to a diode that can convert incident energy into a measurable signal. The detection elements may comprise, for example, a PIN diode, an avalanche diode, an electron multiplier tube (EMT), etc., or combinations thereof. Additionally, the term "detection element" may include or cover "sensing element," "sensor element," "detection cell," or "detector segment," etc. In some embodiments, a pixel on the detector can be a detection element.

An area 325 may be provided between adjacent detection elements. Area 325 may be an isolation area to isolate the sides or corners of neighboring detection elements from one another. Area 325 may comprise an insulating material that is a material different from that of other areas of the detection surface of detector 300. Area 325 may be provided as a cross-shaped area as seen in the plane view of **Fig. 3A****.** Area 325 may be provided as a square. In some embodiments, area 325 may not be provided between adjacent sides of detection elements. For example, in some embodiments, there may be no isolation area provided on a detection surface of a detector.

Detection elements may generate an electric signal commensurate with charged particles received in the active area of a detection element. For example, a detection element may generate an electric current signal commensurate with the energy of a received electron. A pre-processing circuit may convert the generated current signal into a voltage that may represent the intensity of an electron beam spot or a part thereof. The pre-processing circuitry may comprise, for example, pre-amp circuitries. Pre-amp circuitries may include, for example, a charge transfer amplifier (CTA), a transimpedance amplifier (TIA), or an impedance conversion circuit coupled with a CTA or a TIA. In some embodiments, signal processing circuitry may be provided that provides an output signal in arbitrary units on a timewise basis. There may be provided one or a plurality of substrates, such as dies, that may form circuit layers for processing the output of detection elements. The dies may be stacked together in a thickness direction of the detector. Other circuitries may also be provided for other functions. For example, switch actuating circuitries may be provided that may control switching elements for connecting detection elements to one another.

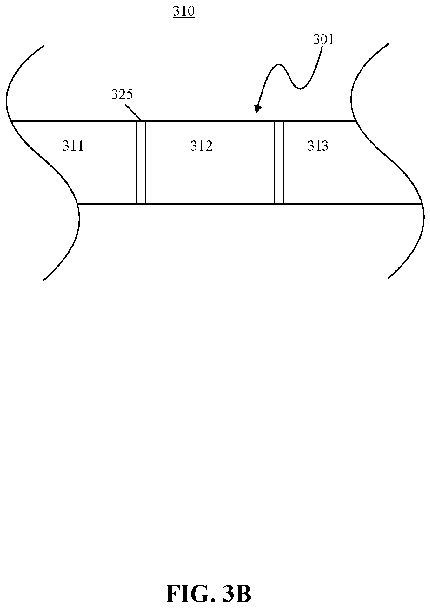

Reference is now made to **Fig. 3B****,** which shows a schematic illustration of a cross-sectional structure of a substrate 310, which may be an example of a structure included in a PIN detector, consistent with embodiments of the present disclosure. Substrate 310 may comprise one or more layers. For example, substrate 310 may be configured to have a plurality of layers stacked in a thickness direction, the thickness direction being substantially parallel to an incidence direction of an electron beam. In some embodiments, substrate 310 may have a plurality of layers stacked in a direction perpendicular to the incidence direction of an electron beam. Substrate 310 may be provided with a sensor surface 301 for receiving incident charged particles. Detection elements (for example detection elements 311, 312, and 313) may be provided in a sensing layer of substrate 310. Area 325 may be provided between adjacent detection elements. For example, substrate 310 may comprise a trench, or other structure that is made of or filled with insulating material. In some embodiments, area 325 may extend fully or partially through substrate 310.

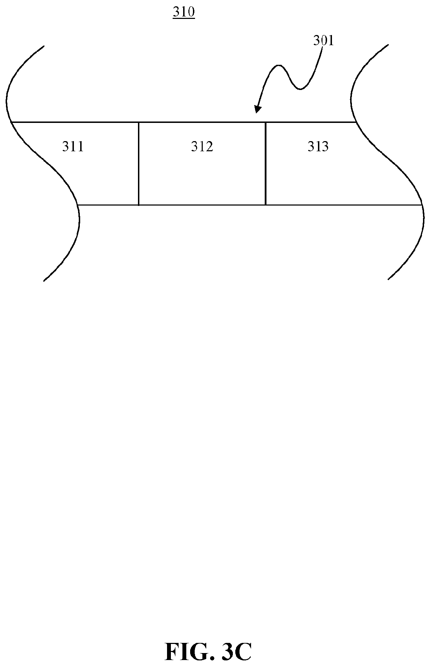

As shown in **Fig. 3C****,** in some embodiments, area 325 may not be provided between detection elements, consistent with embodiments of the present disclosure. For example, there may be no insulating material provided between the sides of adjacent detection elements in cross-sectional view. The plurality of detection elements may be contiguous in cross-sectional view. Isolation between adjacent detection elements may still be achieved by other means, such as by controlling electrical field. For example, electrical field may be controlled between each detection element.

Although the figures may show detection elements 311, 312, and 313 as discrete units, such divisions may not actually be present. For example, the detection elements of a detector may be formed by a semiconductor device constituting a PIN diode device. The PIN diode device may be manufactured as a substrate with a plurality of layers including a p-type region, an intrinsic region, and an n-type region. One or more of such layers may be contiguous in cross-sectional view. In some embodiments, however, detection elements may be provided with physical separation between them. Further layers may also be provided in addition to the sensor layer, such as a circuit layer, and a readout layer, for example.

As one example of a further layer, detector 300 may be provided with one or more circuit layers adjacent to the sensor layer. The one or more circuit layers may comprise line wires, interconnects, and various electronic circuit components. The one or more circuit layers may comprise a processing system. The one or more circuit layers may comprise signal processing circuitries. The one or more circuit layers may be configured to receive the output current detected from detection elements in the sensor layer. The one or more circuit layers and the sensor layer may be provided in the same or separate dies, for example.

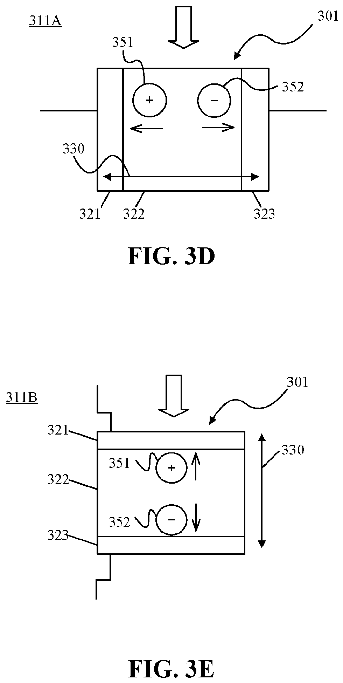

**Figs. 3D** and **3E** show schematic illustrations of individual detection elements, which may be an example of one of detection elements 311, 312, and 313, consistent with embodiments of the present disclosure. For example, in **Fig. 3D****,** a detection element 311A is shown. Detection element 311A may include a semiconductor structure of a p-type layer 321, an intrinsic layer 322, and an n-type layer 323. Detection element 311A may include two terminals, such as an anode and a cathode. Detection element 311A may be reverse biased, and a depletion region 330 may form and may span part of the length of p-type layer 321, substantially the entire length of intrinsic layer 322, and part of the length of n-type layer 323. In depletion region 330, charge carriers may be removed, and new charge carriers generated in depletion region 330 may be swept away according to their charge. For example, when an incoming charged particle reaches sensor surface 301, electron-hole pairs may be created, and a hole 351 may be attracted toward p-type layer 321 while an electron 352 may be attracted toward n-type layer 323. In some embodiments, a protection layer may be provided on sensor surface 301.

As shown in **Fig. 3E****,** a detection element 311B may operate in a similar manner to that of detection element 311A except that an orientation is changed. For example, p-type layer 321 may include sensor surface 301. P-type layer 321 may be exposed to incident charged particles. Thus, an incident charged particle may interact with p-type layer 321 and depletion region 330, and may generate electron-hole pairs. In some embodiments, a metal layer may be provided on top of p-type layer 321.

In operation, a depletion region of a detection element may function as a capture region. An incoming charged particle may interact with the semiconductor material in the depletion region and generate new charges. For example, the detection element may be configured such that a charged particle having a certain amount of energy or greater may cause electrons of the lattice of the semiconductor material to be dislodged, thus creating electron-hole pairs. The resulting electrons and holes may be caused to travel in opposite directions due to, for example, an electric field in the depletion region. Generation of carriers that travel toward terminals of the detection element may correspond to current flow in the detection element.

In a comparative example, a photodiode may be configured to generate electric charge in response to receiving photons. A photon may have energy that corresponds to its wavelength or frequency. Typically, a photon in the visible light spectrum may have energy on the order of about 1 eV. However, in a semiconductor photodiode, it is typical that about 3.6 eV may be required to generate one electron-hole pair. Therefore, photodiodes may encounter difficulties in detecting current generation such as the following.

In general, a level of energy of a photon may be similar to that required to generate an electron-hole pair in a semiconductor photodiode. Thus, in order to generate electric current stably and reliably, it may be necessary that photons of high energy be incident on a semiconductor photodiode. A photon may have energy sufficient to generate one electron-hole pair when its frequency is at or above a certain level.

Furthermore, the electric current generated by electron-hole pairs in response to photon arrival events may be relatively low. Current generated in response to photon arrival events may not be sufficient to overcome background noise. Some diodes, such as a photodiode biased to avalanche or Geiger counting mode, may employ amplification to generate a larger level of electric current so that a useful detection signal can be generated. In some embodiments, a photodiode may be biased to avalanche operation mode. In some embodiments, amplification may be provided by gain blocks attached to the photodiode. An avalanche effect may be generated from strong internal electric fields resulting from bias voltage. The avalanche effect may be used to achieve amplification due to impact ionization.

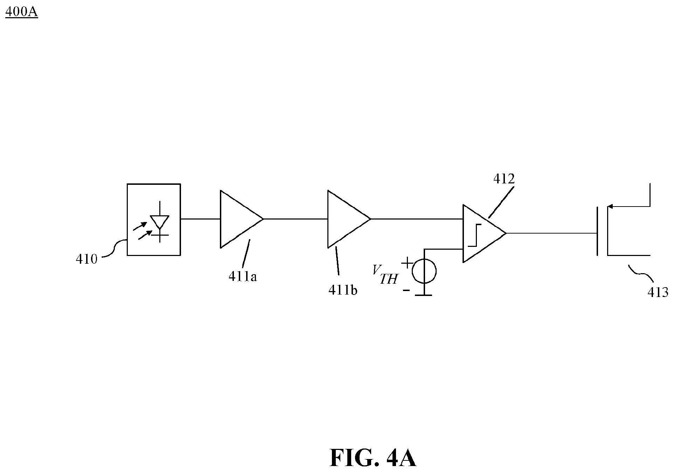

Reference is now made to **Fig. 4A****,** which illustrates a circuit diagram 400A of an exemplary detection element (e.g., detection elements 241, 242, 243 of **Fig. 2A****;** detection elements 311, 312, 313 of **Figs. 3A-3E****,** etc.), consistent with embodiments of the present disclosure. Circuit diagram 400A may include a PIN diode 410, a preamplifier 411a, a pulse shaper 411b, a discriminator 412, and a current source 413 (e.g., MOSFET). In some embodiments, when a particle (e.g., photon, charged particle such as an electron, etc.) is incident on a detection element, PIN diode 410 (corresponding to a detection element) may generate an electrical signal and preamplifier 411a and pulse shaper 411b may amplify or shape the generated electrical signal. Discriminator 412 may output a first value "1" based on the amplified/shaped signal from preamplifier 411a and pulse shaper 411b. Based on the outputted "1" from discriminator 412, current source 413 may drive or enable a current. For example, current source 413 may be configured to drive a current in response to the electrical signal. When a particle is not incident on a detection element within a time span, discriminator 412 may output a second value "0" such that current source 413 does not drive or enable a current. In some embodiments, discriminator 412 may have a discriminator threshold that distinguishes whether an event has occurred. It is appreciated that the discriminator threshold can be set to help achieve optimal results. For instance, the discriminator threshold can be set above a noise level, so that real events are counted without counting noise pulses.

In some embodiments, discriminator 412 may output a first value from a range of values (e.g., where the values are not limited to "1" and "0"). For example, the value may be "stepped" integer values (e.g., 0, 1, 2, 3, 4, etc.) such that discriminator 412 outputs a digital value corresponding to a current value. In some embodiments, discriminator 412 may output stepped integer values for low particle flux (e.g., lower number of photons received on the detection elements in a time period or "frame") applications.

In some embodiments, the value may be "real" analog values (e.g., 0, 0.14, 1, 2.5, etc.) corresponding to a continuous voltage application, where current source 413 may be controlled by the applied voltage. In some embodiments, discriminator 412 may output real analog values for high particle flux (e.g., higher number of photons received on the detection elements in a time period or "frame") applications.

Advantageously, using a discriminator that can output stepped integer values or real analog values allows the architecture of a detector to be moved to silicon, thereby reducing the capacitor per detection element, reducing the overall noise, and increasing the rate at which the detector can count particles. Moreover, the detector described in the disclosed embodiments may accommodate counting a high dynamic range of particles at higher accuracy.

The detector described in the disclosed embodiments may further increase particle counting accuracy and increase electrical signal phase stability in a detection system, thereby improving alignment systems and level sensors that use these detection systems. For example, the detector described in the disclosed embodiments may be used in alignment systems as described in U.S. Patent Nos. 9,927,726, 7,440,079, and 6,628,406, which are incorporated by reference in their entirety, and may be used in level sensors or height sensors, as described below with respect to **Fig. 8****.** In some embodiments, values determined by the detector (e.g., electrical signals, digital values, etc.) may be used in measuring alignment of a feature on a sample. In some embodiments, values determined by the detector (e.g., electrical signals, digital values, etc.) may be used in measuring a level (e.g., height) of a feature on a sample.

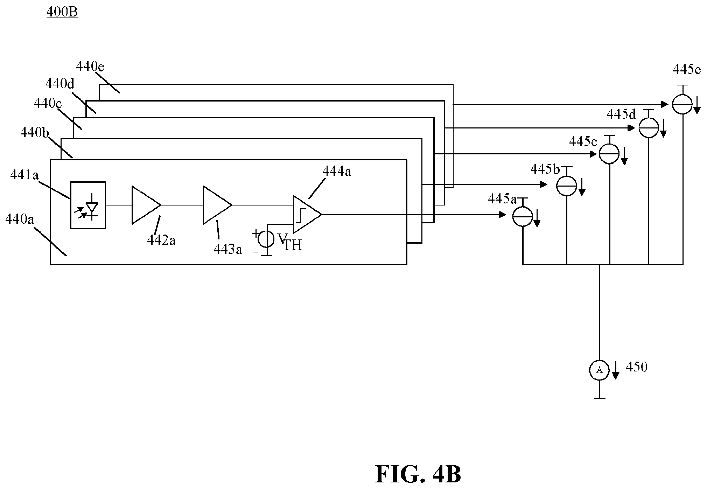

Reference is now made to **Fig. 4B****,** which illustrates a circuit diagram 400B of an exemplary plurality of detection elements (e.g., detection elements 241, 242, 243 of **Fig. 2A****;** detection elements 311, 312, 313 of **Figs. 3A-3E****,** etc.), which is useful for understanding but does not form part of the presently claimed invention Circuit diagram 400B may include components corresponding to a plurality of detection elements, where each detection element may include components and configurations as shown in circuit diagram 400A of **Fig. 4A****.**

For example, a first detection element may include a group 440a of components, the components including a PIN diode 441a, a preamplifier 442a, a pulse shaper 443a, a discriminator 444a, and a node 445a. Similarly, a second detection element may include a group 440b of components including a PIN diode, a preamplifier, a pulse shaper, a discriminator, and a node 445b; a third detection element may include a group 440c of components including a PIN diode, a preamplifier, a pulse shaper, a discriminator, and a node 445c; a fourth detection element may include a group 440d of components including a PIN diode, a preamplifier, a pulse shaper, a discriminator, and a node 445d; and a fifth detection element may include a group 440b of components including a PIN diode, a preamplifier, a pulse shaper, a discriminator, and a node 445e. It should be understood that the number of detection elements in a system is not limited to the five detection elements depicted in **Fig. 4B** (e.g., there may be 1,000 detection elements, less than 1,000 detection elements, or more than 1,000 detection elements in a system, etc.). In some embodiments, more detection elements may be used for a corresponding higher number of beams to increase throughput (e.g., during inspection). For example, in a particular application of this technology, it is desired to achieve a particular throughput. In order to achieve this throughput, it has been determined that more than 1,000 detection elements (and corresponding current sources) may be used for more than 1,000 particle beams to achieve this target throughput. In some embodiments, all of the detection elements may be on one die. In other embodiments, the detection elements may be on a plurality of dies. For example, some detection elements may be on a first die and some detection elements may be on a second die.

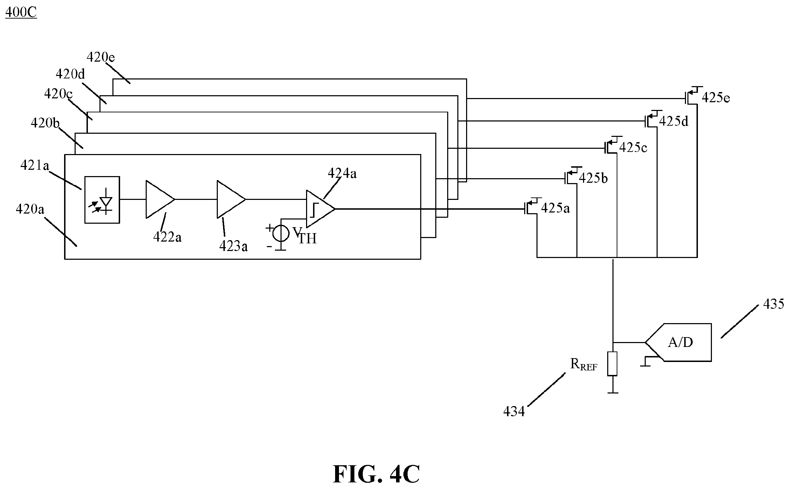

In some embodiments, values from nodes 445a, 445b, 445c, 445d, and 445e may be summed in node 450. While circuit diagram 400B illustrates an exemplary plurality of detection elements, reference is now made to **Fig. 4C****,** which illustrates a possible implementation of **Fig. 4B****.**

Reference is now made to **Fig. 4C****,** which illustrates a circuit diagram 400C of an exemplary plurality of detection elements (e.g., detection elements 241, 242, 243 of **Fig. 2A****;** detection elements 311, 312, 313 of **Figs. 3A-3E****,** etc.), in accordance with the invention according to the wording of the claims. Circuit diagram 400C may include components corresponding to a plurality of detection elements, where each detection element may include components and configurations as shown in circuit diagram 400A of **Fig. 4A** and circuit diagram 400B of **Fig. 4B****.** For example, a first detection element may include a group 420a (e.g., group 440a of **Fig. 4B****)** of components, the components including a PIN diode 421a (e.g., PIN diode 441a of **Fig. 4B****),** a preamplifier 422a (e.g., preamplifier 442a of **Fig. 4B****),** a pulse shaper 423a (e.g., pulse shaper 443a of **Fig. 4B****),** a discriminator 424a (e.g., discriminator 444a of **Fig. 4B****),** and a current source 425a (e.g., node 445a of **Fig. 4B****).** Similarly, a second detection element may include a group 420b (e.g., group 440b of **Fig. 4B****)** of components including a PIN diode, a preamplifier, a pulse shaper, a discriminator, and a current source 425b (e.g., node 445b of **Fig. 4B****);** a third detection element may include a group 420c (e.g., group 440c of **Fig. 4B****)** of components including a PIN diode, a preamplifier, a pulse shaper, a discriminator, and a current source 425c (e.g., node 445c of **Fig. 4B****);** a fourth detection element may include a group 420d (e.g., group 440d of **Fig. 4B****)** of components including a PIN diode, a preamplifier, a pulse shaper, a discriminator, and a current source 425d (e.g., node 445d of **Fig. 4B****);** and a fifth detection element may include a group 420e (e.g., group 440e of **Fig. 4B****)** of components including a PIN diode, a preamplifier, a pulse shaper, a discriminator, and a current source 425e (e.g., node 445e of **Fig. 4B****).** It should be understood that the number of detection elements in a system is not limited to the five detection elements depicted in **Fig. 4C** (e.g., there may be 1,000 detection elements, less than 1,000 detection elements, or more than 1,000 detection elements in a system, etc.). In some embodiments, more detection elements may be used for a corresponding higher number of beams to increase throughput (e.g., during inspection). For example, in a particular application of this technology, it is desired to achieve a particular throughput. In order to achieve this throughput, it has been determined that more than 1,000 detection elements (and corresponding current sources) may be used for more than 1,000 particle beams to achieve this throughput. In some embodiments, all of the detection elements may be on one die. In other embodiments, the detection elements may be on a plurality of dies. For example, some detection elements may be on a first die and some detection elements may be on a second die.

In some embodiments, when a particle (e.g., photon, charged particle such as an electron, etc.) is incident on a detection element, the corresponding PIN diode (e.g., PIN diode 421a) may generate an electrical signal and the corresponding amplifier/shaper (e.g., preamplifier 422a and pulse shaper 423a) may amplify or shape the generated electrical signal. A discriminator of a detection element may output a first value "1" based on the amplified/shaped signal. Based on the outputted "1" from the discriminator, the corresponding current source may drive or enable a current. For example, the current source may be configured to drive a current in response to the electrical signal. When a particle is not incident on a detection element within a time span, the corresponding discriminator may output a second value "0" such that the current source does not drive or enable a current. In some embodiments, a discriminator may have a discriminator threshold that distinguishes whether an event has occurred. It is appreciated that the discriminator threshold can be set to help achieve optimal results. For instance, the discriminator threshold can be set above a noise level, so that real events are counted without counting noise pulses.

For example, discriminator 424a may output a first value "1" based on the amplified/shaped signal from its corresponding pulse shaper 423a when a particle is incident on its corresponding detection element. Based on the outputted "1" from discriminator 424a, current source 425a may drive or enable a current. A discriminator from another detection element (e.g., from group 420b, 420c, 420d, or 420e) may output a second value "0" such that a corresponding current source does not drive or enable a current when a particle is not incident on its detection element within a time span.

In some embodiments, discriminator 424a may output a first value from a range of values (e.g., where the values are not limited to "1" and "0"). For example, the value may be "stepped" integer values (e.g., 0, 1, 2, 3, 4, etc.) such that discriminator 424a outputs a digital value corresponding to a current value. In some embodiments, discriminator 424a may output stepped integer values for low particle flux (e.g., lower number of photons received on the detection elements in a time period or "frame") applications.

In some embodiments, the value may be "real" analog values (e.g., 0, 0.14, 1, 2.5, etc.) corresponding to a continuous voltage application, where current source 425a may be controlled by the applied voltage. In some embodiments, discriminator 424a may output real analog values for high particle flux (e.g., higher number of photons received on the detection elements in a time period or "frame") applications.

Advantageously, using a discriminator that can output stepped integer values or real analog values allows the architecture of a detector to be moved to silicon, thereby reducing the capacitor per detection element, reducing the overall noise, and increasing the rate at which the detector can count particles. Moreover, the detector described in the disclosed embodiments may accommodate counting a high dynamic range of particles at higher accuracy.

The detector described in the disclosed embodiments may further increase particle counting accuracy and increase electrical signal phase stability in a detection system, thereby improving alignment systems and level sensors that use these detection systems. For example, the detector described in the disclosed embodiments may be used in alignment systems as described in U.S. Patent Nos. 9,927,726, 7,440,079, and 6,628,406, which are incorporated by reference in their entirety, and may be used in level sensors or height sensors, as described below with respect to **Fig. 8****.** In some embodiments, values determined by the detector (e.g., electrical signals, digital values, etc.) may be used in measuring alignment of a feature on a sample. In some embodiments, values determined by the detector (e.g., electrical signals, digital values, etc.) may be used in measuring a level (e.g., height) of a feature on a sample.

In some embodiments, current sources 425a-425e may be configured to be in parallel and may be coupled to a common resistor 434 (e.g., node 450 of **Fig. 4B****).** An analog-to-digital converter (ADC) 435 (e.g., node 450 of **Fig. 4B****)** may be configured to measure a voltage over resistor 434. Resistor 434 may be configured to combine or to determine a sum of the current from the current sources (e.g., the sum of the driven or enabled current from current sources 425a-425e). For example, configurations may enable combining current output by the current sources to create a combined current. Circuitry, such as ADC 435, in the detection system may determine a total number of particles incident on the detector (e.g., on the plurality of detection elements) based on a current value corresponding to a particle landing on a detection element, the determined sum of the current from the current sources, the resistance of resistor 434, and the voltage measured over resistor 434 (e.g., the total number of particles incident on the detector may be determined based on a direct relationship between the voltage and a product of the total number of particles, the sum of the current, and the resistance of resistor 434). For example, ADC 435 may be configured to convert a combined current to a digital value that is indicative of the electrical signals output by the detection elements.

Counting particles on a pixelated detector in an analog manner, as described above, advantageously determines the total number of particles incident on the detector at a high frame rate, with reduced power consumption, and in a manner that is scalable. This is in contrast to counting particles in a digital manner, which may not be desirable since digitally counting particles requires using digital logic to count each detector element and may result in slower particle counting, higher power consumption, or miscounting of particles.

Moreover, CMOS technology used for the current sources has extremely low leakage current, thereby reducing inaccuracy and power dissipation in non-active current sources (e.g., current sources that are not driven or enabled, corresponding to a discriminator outputting a "0"). The low leakage current is advantageous in that the signal of a current source of a single active detection element (e.g., a single current source with driven or enabled current) may be discernable, even if the rest of the current sources are non-active.

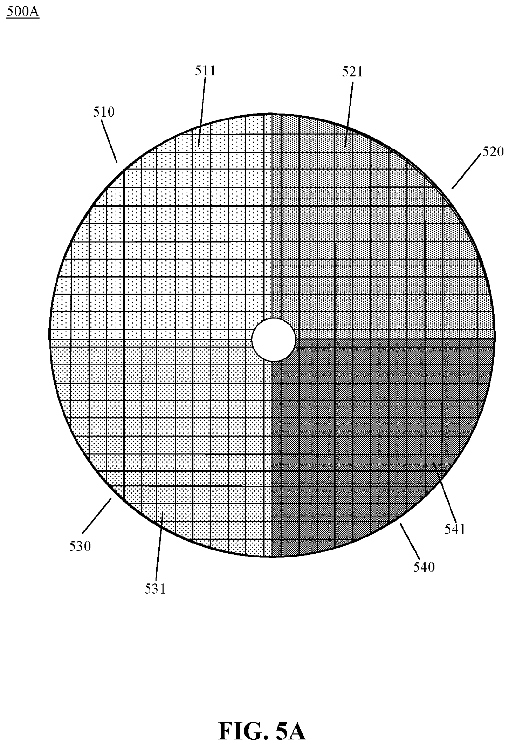

Reference is now made to **Fig. 5A****,** which illustrates a schematic representation of an exemplary structure of a detector 500A, consistent with embodiments of the present disclosure. Detector 500A may be provided as detector 144, electron detection device 240, or detector 300 with reference to **Fig. 2A** **Fig. 2B****,** and **Fig. 3A**

Detector 500A may comprise groups 510, 520, 530, and 540 of detection elements. For example, group 510 may include detection elements 511, group 520 may include detection elements 521, group 530 may include detection elements 531, and group 540 may include detection elements 541. Circuit diagram 400A of **Fig. 4A****,** circuit diagram 400B of **Fig. 4B****,** and circuit diagram 400C of **Fig. 4C** may apply to each group of detection elements, advantageously allowing for scalability in detection systems. While **Fig. 5A** shows a somewhat uniformly shaped groupings of detection elements, it is appreciated that the groupings of detection/sensing elements are configurable, such as described in U.S. Publication No. 2020/0219696, which is incorporated by reference in its entirety.

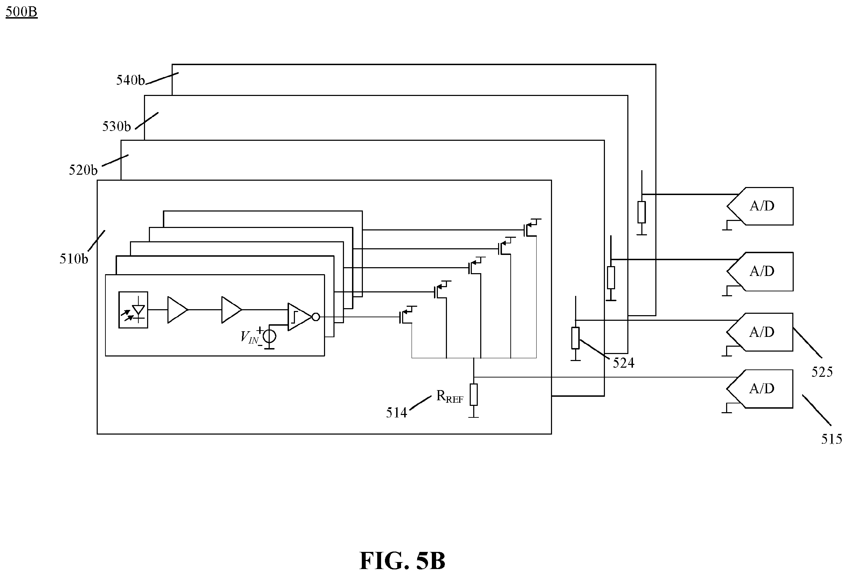

For example, reference is now made to **Fig. 5B****,** which illustrates a circuit diagram 500B, consistent with embodiments of the present disclosure. Each detection element (e.g., detection elements 511, 521, 531, and 541) of each group (e.g., groups 510, 520, 530, and 540) may include a PIN diode (e.g., PIN diode 410 of **Fig. 4A****,** PIN diode 421a of **Fig. 4C****),** an amplifier/shaper (e.g., amplifier/shaper 411 of **Fig. 4A****,** preamplifier 422a of **Fig. 4C****,** pulse shaper 423a of **Fig. 4C****),** a discriminator (e.g., discriminator 412; discriminators 412a-412h of **Fig. 4B****;** discriminator 424a of **Fig. 4C****),** and a current source (e.g., current source 413 of **Fig. 4A****;** current sources 413a-413h of **Fig. 4B****;** current sources 425a-c of **Fig. 4C****)** (e.g., MOSFET).

Similar to embodiments described with respect to **Fig. 4A****,** **Fig. 4B****,** and **Fig. 4C** above, when a particle (e.g., photon, charged particle such as an electron, etc.) is incident on a detection element, the corresponding PIN diode (e.g., PIN diode 410 of **Fig. 4A****)** may generate an electrical signal and the corresponding amplifier/shaper (e.g., amplifier/shaper 411 of **Fig. 4A****)** may amplify or shape the generated electrical signal. A discriminator (e.g., discriminator 412a of **Fig. 4A****)** of a detection element may output a first value "1" based on the amplified/shaped signal. Based on the outputted "1" from the discriminator, the corresponding current source (e.g., current source 413a of **Fig. 4A****)** may drive or enable a current. For example, a current source may be configured to drive a current in response to the electrical signal. When a particle is not incident on a detection element within a time span, the corresponding discriminator (e.g., discriminator 412b of **Fig. 4A****)** may output a second value "0" such that the current source (e.g., current source 413b of **Fig. 4A****)** does not drive or enable a current. In some embodiments, a discriminator may have a discriminator threshold that distinguishes whether an event has occurred. It is appreciated that the discriminator threshold can be set to help achieve optimal results. For instance, the discriminator threshold can be set above a noise level, so that real events are counted without counting noise pulses.

In some embodiments, a discriminator may output a first value from a range of values (e.g., where the values are not limited to "1" and "0"). For example, the value may be "stepped" integer values (e.g., 0, 1, 2, 3, 4, etc.) such that the discriminator outputs a digital value corresponding to a current value. In some embodiments, the discriminator may output stepped integer values for low particle flux (e.g., lower number of photons received on the detection elements in a time period or "frame") applications.

In some embodiments, the value may be "real" analog values (e.g., 0, 0.14, 1, 2.5, etc.) corresponding to a continuous voltage application, where a corresponding current source may be controlled by the applied voltage. In some embodiments, the discriminator may output real analog values for high particle flux (e.g., higher number of photons received on the detection elements in a time period or "frame") applications.

Advantageously, using a discriminator that can output stepped integer values or real analog values allows the architecture of a detector to be moved to silicon, thereby reducing the capacitor per detection element, reducing the overall noise, and increasing the rate at which the detector can count particles. Moreover, the detector described in the disclosed embodiments may accommodate counting a high dynamic range of particles at higher accuracy.

The detector described in the disclosed embodiments may further increase particle counting accuracy and increase electrical signal phase stability in a detection system, thereby improving alignment systems and level sensors that use these detection systems. For example, the detector described in the disclosed embodiments may be used in alignment systems as described in U.S. Patent Nos. 9,927,726, 7,440,079, and 6,628,406, which are incorporated by reference in their entirety, and may be used in level sensors or height sensors, as described below with respect to **Fig. 8****.** In some embodiments, values determined by the detector (e.g., electrical signals, digital values, etc.) may be used in measuring alignment of a feature on a sample. In some embodiments, values determined by the detector (e.g., electrical signals, digital values, etc.) may be used in measuring a level (e.g., height) of a feature on a sample.

In some embodiments, circuit diagram 500B may include group 510b of detection elements, corresponding to group 510 of **Fig. 5A****,** group 520b, corresponding to group 520 of **Fig. 5A****,** group 530b, corresponding to group 530 of **Fig. 5A****,** and group 540b, corresponding to group 540 of **Fig. 5A****.** Each of groups 510b-540b of detection elements (which may include detection element 511 of **Fig. 5A****)** may include a PIN diode, preamplifier, pulse shaper, discriminator, and current source for each detection element in a group.

Similar to embodiments described with respect to **Fig. 4A****,** **Fig. 4B****,** and **Fig. 4C** above, current sources of a group (e.g., groups 510b-540b) of detection elements may be configured to be in parallel and may be coupled to a common resistor 514 while current sources of another group (e.g., another group of groups 510b-540b) of detection elements may be configured to be in parallel and may be coupled to a separate common resistor 524. An analog-to-digital converter (ADC) 515 may be configured to measure a voltage over resistor 514 while an ADC 525 may be configured to measure a voltage over resistor 524. Resistor 514 may be configured to determine a sum of the current from current sources of group 510b while resistor 524 may be configured to determine a sum of the current from current sources of group 520b. For example, configurations may enable combining current output by current sources of group 510b to create a first combined current and combining current output by current sources of group 520b to create a second combined current. Circuitry in the detection system, such as ADC 515, may determine a total number of particles incident on group 510b of detection elements (e.g., which may include detection elements 511 of **Fig. 5A****)** based on a current value corresponding to a particle landing on a detection element 511, the determined sum of the current from current sources of group 510b, the resistance of resistor 514, and the voltage measured over resistor 514 (e.g., the total number of particles incident on group 510b of detection elements may be determined based on a direct relationship between the voltage and a product of the total number of particles, the sum of the current, and the resistance of resistor 514). For example, ADC 515 may be configured to convert a combined current to a digital value that is indicative of the electrical signals output by the detection elements.

Similarly, circuitry in the detection system, such as ADC 525, may determine a total number of particles incident on group 520b of detection elements (e.g., including detection elements 521) based on a current value corresponding to a particle landing on a detection element 521, the determined sum of the current from current sources of group 520b, the resistance of resistor 524, and the voltage measured over resistor 524 (e.g., the total number of particles incident on group 520b detection elements may be determined based on a direct relationship between the voltage and a product of the total number of particles, the sum of the current, and the resistance of resistor 524). For example, ADC 525 may be configured to convert a combined current to a digital value that is indicative of the electrical signals output by the detection elements.

Circuitry in the detection system may determine a total number of particles incident on the detector by determining a sum of the particles incident on group 510b of detection elements and the particles incident on group 520b of detection elements. This embodiment determines the number of particles incident on a detector with a high number of detection elements (e.g., greater than 1,000 detection elements) by determining the number of particles incident on groups of detection elements on a detector in an analog manner. A detection element may be a pixel of a detector. This advantageously determines the number of particles incident on a detector to be highly scalable, performed at a high frame rate, and performed with reduced power consumption.

It should also be understood that the number of groups of detection elements in a system is not limited to the groups depicted in **Fig. 5A** and **Fig. 5B** (e.g., there may be more than two groups of detection elements in a system, etc.).

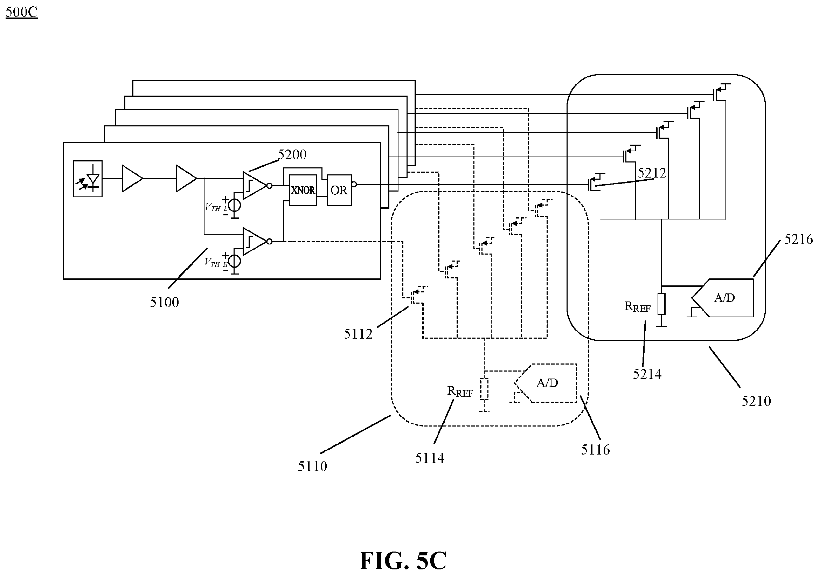

Reference is now made to **Fig. 5C****,** which illustrates a circuit diagram 500C of an exemplary plurality of detection elements (e.g., detection elements 241, 242, 243 of **Fig. 2A****;** detection elements 311, 312, 313 of **Figs. 3A-3E****,** detection elements 511, 521, 531, and 541 of **Fig. 5A****,** etc.), consistent with embodiments of the present disclosure. Each detection element may include a PIN diode (e.g., PIN diode 410 of **Fig. 4A****,** PIN diode 421a of **Fig. 4C****),** an amplifier/shaper (e.g., amplifier/shaper 411 of **Fig. 4A****,** preamplifier 422a of **Fig. 4C****,** pulse shaper 423a of **Fig. 4C****),** a first discriminator 5100 (e.g., discriminator 412; discriminators 412a-412h of **Fig. 4B****;** discriminator 424a of **Fig. 4C****),** a first current source 5112 (e.g., current source 413 of **Fig. 4A****;** current sources 413a-413h of **Fig. 4B****;** current sources 425a-c of **Fig. 4C****)** (e.g., MOSFET) associated with first discriminator 5100, a second discriminator 5200 (e.g., discriminator 412; discriminators 412a-412h of **Fig. 4B****;** discriminator 424a of **Fig. 4C****),** and a second current source 5212 (e.g., current source 413 of **Fig. 4A****;** current sources 413a-413h of **Fig. 4B****;** current sources 425a-c of **Fig. 4C****)** (e.g., MOSFET) associated with second discriminator 5200.

Similar to embodiments described with respect to **Fig. 4A****,** **Fig. 4B****,** and **Fig. 4C** above, when a particle (e.g., photon, charged particle such as an electron, etc.) is incident on a detection element, the corresponding PIN diode (e.g., PIN diode 410 of **Fig. 4A****)** may generate an electrical signal and the corresponding amplifier/shaper (e.g., amplifier/shaper 411 of **Fig. 4A****)** may amplify or shape the generated electrical signal. A discriminator (e.g., discriminator 412a of **Fig. 4A****)** of a detection element may output a first value "1" based on the amplified/shaped signal. Based on the outputted "1" from the discriminator, the corresponding current source (e.g., current source 413a of **Fig. 4A****)** may drive or enable a current. For example, a current source may be configured to drive a current in response to the electrical signal. When a particle is not incident on a detection element within a time span, the corresponding discriminator (e.g., discriminator 412b of **Fig. 4A****)** may output a second value "0" such that the current source (e.g., current source 413b of **Fig. 4A****)** does not drive or enable a current. In some embodiments, a discriminator may have a discriminator threshold that distinguishes whether an event has occurred. It is appreciated that the discriminator threshold can be set to help achieve optimal results. For instance, the discriminator threshold can be set above a noise level, so that real events are counted without counting noise pulses.

In some embodiments, a discriminator may output a first value from a range of values (e.g., where the values are not limited to "1" and "0"). For example, the value may be "stepped" integer values (e.g., 0, 1, 2, 3, 4, etc.) such that the discriminator outputs a digital value corresponding to a current value. In some embodiments, the discriminator may output stepped integer values for low particle flux (e.g., lower number of photons received on the detection elements in a time period or "frame") applications.

In some embodiments, the value may be "real" analog values (e.g., 0, 0.14, 1, 2.5, etc.) corresponding to a continuous voltage application, where a corresponding current source may be controlled by the applied voltage. In some embodiments, the discriminator may output real analog values for high particle flux (e.g., higher number of photons received on the detection elements in a time period or "frame") applications.

Advantageously, using a discriminator that can output stepped integer values or real analog values allows the architecture of a detector to be moved to silicon, thereby reducing the capacitor per detection element, reducing the overall noise, and increasing the rate at which the detector can count particles. Moreover, the detector described in the disclosed embodiments may accommodate counting a high dynamic range of particles at higher accuracy.

The detector described in the disclosed embodiments may further increase particle counting accuracy and increase electrical signal phase stability in a detection system, thereby improving alignment systems and level sensors that use these detection systems. For example, the detector described in the disclosed embodiments may be used in alignment systems as described in U.S. Patent Nos. 9,927,726, 7,440,079, and 6,628,406, which are incorporated by reference in their entirety, and may be used in level sensors or height sensors, as described below with respect to **Fig. 8****.** In some embodiments, values determined by the detector (e.g., electrical signals, digital values, etc.) may be used in measuring alignment of a feature on a sample. In some embodiments, values determined by the detector (e.g., electrical signals, digital values, etc.) may be used in measuring a level (e.g., height) of a feature on a sample.

In some embodiments, first discriminator 5100 may have a first discriminator threshold for higher energy particles (e.g., higher energy electrons) and second discriminator 5200 may have a second discriminator threshold for lower energy particles (e.g., lower energy electrons).

Similar to embodiments described with respect to **Fig. 4A****,** **Fig. 4B****,** **Fig. 4C****,** **Fig. 5A****,** and **Fig. 5B** above, a first group 5110 of current sources of detection elements may be configured to be in parallel and may be coupled to a common resistor 5114 while a second group 5210 of current sources of detection elements may be configured to be in parallel and may be coupled to a separate common resistor 5214. In some embodiments, first group 5110 may correspond to first discriminator 5100 for higher energy particles of a plurality of detection elements and second group 5210 may correspond to a second discriminator 5200 for lower energy particles of a plurality of detection elements.

An analog-to-digital converter (ADC) 5116 may be configured to measure a voltage over resistor 5114 while an ADC 5216 may be configured to measure a voltage over resistor 5214. Resistor 5114 may be configured to determine a sum of the current from current sources of group 5110 while resistor 5214 may be configured to determine a sum of the current from current sources of group 5210. For example, configurations may enable combining current output by current sources of group 5110 to create a first combined current and combining current output by current sources of group 5210 to create a second combined current.

Circuitry in the detection system, such as ADC 5116, may determine a total number of higher energy particles incident on detection elements of group 5110 based on a current value corresponding to a particle landing on a detection element, the determined sum of the current from current sources of group 5110, the resistance of resistor 5114, and the voltage measured over resistor 5114 (e.g., the total number of particles incident on detection elements of group 5110 may be determined based on a direct relationship between the voltage and a product of the total number of particles, the sum of the current, and the resistance of resistor 5114). For example, ADC 5116 may be configured to convert a combined current to a digital value that is indicative of the electrical signals output by the detection elements.

Similarly, circuitry in the detection system, such as ADC 5216, may determine a total number of lower energy particles incident on detection elements of group 5210 based on a current value corresponding to a particle landing on a detection element, the determined sum of the current from current sources of group 5210, the resistance of resistor 5214, and the voltage measured over resistor 5214 (e.g., the total number of particles incident on detection elements of group 5210 may be determined based on a direct relationship between the voltage and a product of the total number of particles, the sum of the current, and the resistance of resistor 5214). For example, ADC 5216 may be configured to convert a combined current to a digital value that is indicative of the electrical signals output by the detection elements.

Circuitry in the detection system may determine a total number of particles incident on the detector by determining a sum of the particles incident on detection elements of group 5110 and the particles incident on detection elements of group 5210. This embodiment determines the number of particles incident on a detector with a high number of detection elements (e.g., greater than 1,000 detection elements) by discriminating between higher energy particles and lower energy particles and determining the number of particles incident on detection elements on a detector in an analog manner. This advantageously determines the number of particles incident on a detector to be highly scalable, performed at a high frame rate, and performed with reduced power consumption.

It should also be understood that the number of groups of detection elements in a system is not limited to the groups depicted in **Fig. 5C** (e.g., there may be more than two levels of energy discrimination in a system, etc.).

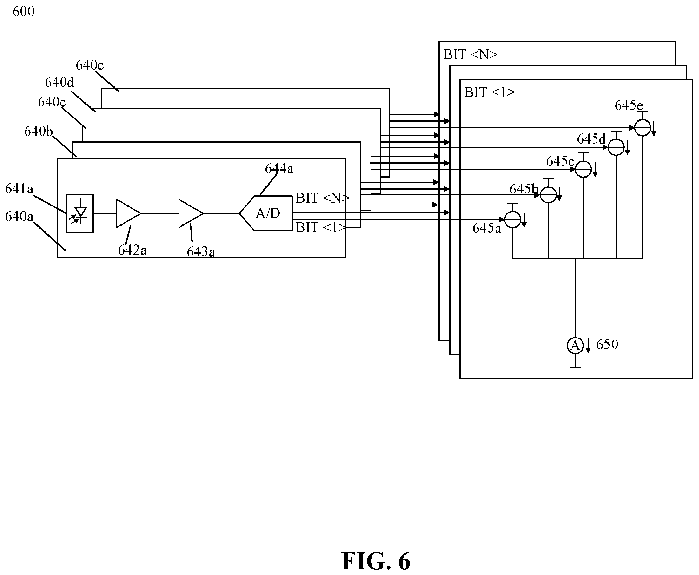

Reference is now made to **Fig. 6****,** which illustrates a circuit diagram 600 of an exemplary plurality of detection elements (e.g., detection elements 241, 242, 243 of **Fig. 2A****;** detection elements 311, 312, 313 of **Figs. 3A-3E****,** etc.), consistent with embodiments of the present disclosure. Circuit diagram 600 may include components corresponding to a plurality of detection elements.

For example, a first detection element may include a group 640a of components, the components including a PIN diode 641a, a preamplifier 642a, a pulse shaper 643a, an ADC 644a, and a node 645a. Similarly, a second detection element may include a group 640b of components including a PIN diode, a preamplifier, a pulse shaper, an ADC, and a node 645b; a third detection element may include a group 640c of components including a PIN diode, a preamplifier, a pulse shaper, an ADC, and a node 645c; a fourth detection element may include a group 640d of components including a PIN diode, a preamplifier, a pulse shaper, an ADC, and a node 645d; and a fifth detection element may include a group 640b of components including a PIN diode, a preamplifier, a pulse shaper, an ADC, and a node 645e. It should be understood that the number of detection elements in a system is not limited to the five detection elements depicted in **Fig. 6** (e.g., there may be 1,000 detection elements, less than 1,000 detection elements, or more than 1,000 detection elements in a system, etc.). In some embodiments, more detection elements may be used for a corresponding higher number of beams to increase throughput (e.g., during inspection). For example, in a particular application of this technology, it is desired to achieve a particular throughput. In order to achieve this throughput, it has been determined that more than 1,000 detection elements (and corresponding current sources) may be used for more than 1,000 particle beams to achieve this target throughput. In some embodiments, all of the detection elements may be on one die. In other embodiments, the detection elements may be on a plurality of dies. For example, some detection elements may be on a first die and some detection elements may be on a second die.

In some embodiments, when a particle (e.g., photon, charged particle such as an electron, etc.) is incident on a detection element, the corresponding PIN diode (e.g., PIN diode 641a) may generate an electrical signal and the corresponding amplifier/shaper (e.g., preamplifier 642a and pulse shaper 643a) may amplify or shape the generated electrical signal.

In some embodiments, an ADC of a detection element (e.g., ADC 644a of detection element 640a) may be connected to one or more bit lines. For example, each detection element may be connected to a first bit line BIT <1> and any number of additional bit lines BIT <N>. Different combinations of bit lines of an ADC may be activated (e.g., "on" or "off") based on the electrical signal generated from the corresponding photodiode (e.g., the generated electrical signal may include a plurality of binary digits (bits), where each bit is a digital value corresponding to a bit line).

In some embodiments, nodes 645a, 645b, 645c, 645d, and 645e may each correspond to a different detection element connected to the same bit line. In some embodiments, values from nodes 645a, 645b, 645c, 645d, and 645e may be summed in node 650. In some embodiments, values from nodes for each bit line of a plurality of bit lines (e.g., bit lines BIT <N>) may be summed in a corresponding node.

In some embodiments, nodes 645a, 645b, 645c, 645d, and 645e may be current sources for a corresponding bit line, where the current sources may be configured to be in parallel and may be coupled to a common resistor (e.g., of node 650). An ADC (e.g., of node 650) may be configured to measure a voltage over the resistor. The resistor may be configured to combine or to determine a sum of the current from the current sources (e.g., the sum of the driven or enabled current from nodes 645a, 645b, 645c, 645d, and 645e). For example, configurations may enable combining current output by the current sources to create a combined current. Circuitry, such as an ADC of node 650 of a bit line, in the detection system may determine a value corresponding to the bit line (e.g., BIT <1>) connected to a plurality of detection elements (e.g., detection elements 640a, 640b, 640c, 640d, 640e) based on the determined sum of the current from the current sources, the resistance of node 650, and the voltage measured over the resistor of node 650. For example, the ADC of node 650 may be configured to convert a combined current to a digital value corresponding to the electrical signals output by the detection elements. The ADC of each node corresponding to a bit line may determine its corresponding value in the same manner as the ADC of node 650.

Circuitry connected to node 650 of each bit line of a plurality of bit lines (e.g., BIT <N>) in the detection system may determine a total number of particles incident on detection elements of the detector based on a determined sum of nodes 650 of each bit line.

Advantageously, using a detection element with an ADC connected to a plurality of bit lines increases the speed and accuracy of particle counting on the detector compared to using a detection element with a single output.

The detector described in the disclosed embodiments may further increase particle counting accuracy and increase electrical signal phase stability in a detection system, thereby improving alignment systems and level sensors that use these detection systems. For example, the detector described in the disclosed embodiments may be used in alignment systems as described in U.S. Patent Nos. 9,927,726, 7,440,079, and 6,628,406, which are incorporated by reference in their entirety, and may be used in level sensors or height sensors, as described below with respect to **Fig. 8****.** In some embodiments, values determined by the detector (e.g., electrical signals, digital values, etc.) may be used in measuring alignment of a feature on a sample. In some embodiments, values determined by the detector (e.g., electrical signals, digital values, etc.) may be used in measuring a level (e.g., height) of a feature on a sample.

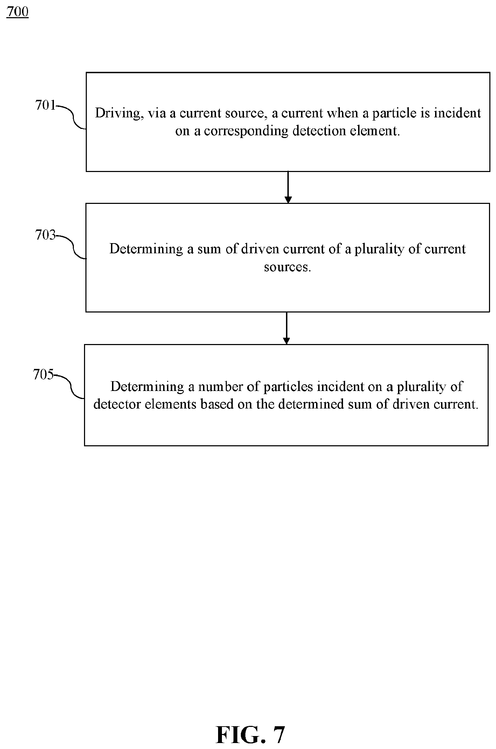

Reference is now made to **Fig. 7****,** a flowchart illustrating an exemplary process 600 of counting particles on a detector, consistent with embodiments of the present disclosure. The steps of method 600 can be performed by a system executing on or otherwise using the features of a computing device (e.g., controller 109 of **Fig. 1****,** **Fig. 2A****,** **Fig. 2B****,** etc.) for purposes of illustration. It is appreciated that the illustrated method 600 can be altered to modify the order of steps and to include additional steps.

At step 701, a current source (e.g., current source 413 of **Fig. 4A****;** current sources 413a-413h of **Fig. 4B****;** current sources 532, 542 of **Fig. 5B****;** nodes 645a-e of **Fig. 6****;** etc.) may drive or enable a current when a particle (e.g., photon, charged particle such as an electron, etc.) is incident on a corresponding detection element (e.g., detection elements 241, 242, 243 of **Fig. 2A****;** detection elements 311, 312, 313 of **Figs. 3A-3E****;** detection elements 511, 521 of **Fig. 5B****;** detection elements 640a-e of **Fig. 6****;** etc.). For example, when a particle is incident on a detection element, the corresponding PIN diode (e.g., PIN diode 410 of **Fig. 4A****;** PIN diode 641a of **Fig. 6****)** may generate an electrical signal and the corresponding amplifier/shaper (e.g., amplifier/shaper 411 of **Fig. 4A****;** preamplifier 642a and pulse shaper 643a of **Fig. 6****)** may amplify or shape the generated electrical signal. A discriminator of a detection element may output a first value "1" based on the amplified/shaped signal. Based on the outputted "1" from the discriminator, the corresponding current source may drive or enable a current. For example, a current source may be configured to drive a current in response to the electrical signal. When a particle is not incident on a detection element within a time span, the corresponding discriminator may output a second value "0" such that the current source does not drive or enable a current. In some embodiments, a discriminator may have a discriminator threshold that distinguishes whether an event has occurred. It is appreciated that the discriminator threshold can be set to help achieve optimal results. For instance, the discriminator threshold can be set above a noise level, so that real events are counted without counting noise pulses.

In some embodiments, a discriminator may output a first value from a range of values (e.g., where the values are not limited to "1" and "0"). For example, the value may be "stepped" integer values (e.g., 0, 1, 2, 3, 4, etc.) such that the discriminator outputs a digital value corresponding to a current value. In some embodiments, the discriminator may output stepped integer values for low particle flux (e.g., lower number of photons received on the detection elements in a time period or "frame") applications.

In some embodiments, the value may be "real" analog values (e.g., 0, 0.14, 1, 2.5, etc.) corresponding to a continuous voltage application, where a corresponding current source may be controlled by the applied voltage. In some embodiments, the discriminator may output real analog values for high particle flux (e.g., higher number of photons received on the detection elements in a time period or "frame") applications.

Advantageously, using a discriminator that can output stepped integer values or real analog values allows the architecture of a detector to be moved to silicon, thereby reducing the capacitor per detection element, reducing the overall noise, and increasing the rate at which the detector can count particles. Moreover, the detector described in the disclosed embodiments may accommodate counting a high dynamic range of particles at higher accuracy.

The detector described in the disclosed embodiments may further increase particle counting accuracy and increase electrical signal phase stability in a detection system, thereby improving alignment systems and level sensors that use these detection systems. For example, the detector described in the disclosed embodiments may be used in alignment systems as described in U.S. Patent Nos. 9,927,726, 7,440,079, and 6,628,406, which are incorporated by reference in their entirety, and may be used in level sensors or height sensors, as described below with respect to **Fig. 8****.** In some embodiments, values determined by the detector (e.g., electrical signals, digital values, etc.) may be used in measuring alignment of a feature on a sample. In some embodiments, values determined by the detector (e.g., electrical signals, digital values, etc.) may be used in measuring a level (e.g., height) of a feature on a sample.

In some embodiments, each detection element may include an ADC (e.g., ADC 644a of **Fig. 6****).** In some embodiments, an ADC of a detection element may be connected to one or more bit lines. For example, each detection element may be connected to a first bit line (e.g., bit line BIT <1> of **Fig. 6****)** and any number of additional bit lines (e.g., bit lines BIT <N> of **Fig. 6****).** Different combinations of bit lines of an ADC may be activated (e.g., "on" or "off") based on the electrical signal generated from the corresponding photodiode (e.g., the generated electrical signal may include a plurality of bits, where each bit is a digital value corresponding to a bit line).

At step 703, a resistor (e.g., resistor 414 of **Fig. 4B****;** resistors 533, 543 of **Fig. 5B****;** etc.) may be configured to determine a sum of the current from a plurality of current sources (e.g., the sum of the driven or enabled current from current sources). For example, the plurality of current sources may be configured to be in parallel and may be coupled to a common resistor. An analog-to-digital converter (ADC) (e.g., ADC 415 of **Fig. 4B****;** ADCs 534, 544 of **Fig. 5B****;** etc.) may be configured to measure a voltage over the resistor.

In some embodiments where each detection element includes an ADC (e.g., **Fig. 6****),** current sources for a bit line may be configured to be in parallel and may be coupled to a common resistor (e.g., of node 650 of **Fig. 6****).** An ADC (e.g., of node 650 of **Fig. 6****)** may be configured to measure a voltage over the resistor. The resistor may be configured to combine or to determine a sum of the current from the current sources (e.g., the sum of the driven or enabled current from nodes 645a, 645b, 645c, 645d, and 645e of **Fig. 6****).** For example, configurations may enable combining current output by the current sources to create a combined current. Circuitry, such as an ADC of a bit line, in the detection system may determine a value corresponding to the bit line connected to a plurality of detection elements (e.g., detection elements 640a, 640b, 640c, 640d, 640e of **Fig. 6****)** based on the determined sum of the current from the current sources, the resistance of a node of the bit line, and the voltage measured over the resistor of the node of the bit line. For example, the ADC of the node of the bit line may be configured to convert a combined current to a digital value corresponding to the electrical signals output by the detection elements.

At step 705, circuitry in a detection system, such as an ADC, may determine a total number of particles incident on the detector (e.g., on the plurality of detection elements) based on the determined sum of the driven current from the current sources. For example, configurations may enable combining current output by the current sources to create a combined current. For example, an ADC may determine a total number of particles incident on the detector based on a current value corresponding to a particle landing on a detection element, the determined sum of the current from the current sources, the resistance of a resistor, and the voltage measured over the resistor. The total number of particles incident on the detector may be determined based on a direct relationship between the voltage and a product of the total number of particles, the sum of the current, and the resistance of the resistor. For example, an ADC may be configured to convert a combined current to a digital value that is indicative of the electrical signals output by the detection elements.

In some embodiments where each detection element includes an ADC (e.g., **Fig. 6****),** circuitry connected to the node of each bit line of a plurality of bit lines (e.g., BIT <N> of **Fig. 6****)** in the detection system may determine a total number of particles incident on detection elements of the detector based on a determined sum of the nodes of each bit line.

Reference is now made to **Fig. 8****,** a schematic diagram illustrating an exemplary level sensor system 800, consistent with embodiments of the present disclosure.

A topography measurement system, such as a level sensor or a height sensor, may be integrated in a lithographic apparatus and arranged to measure a topography of a top surface of a substrate or wafer. A map of the topography of the substrate, also referred to as height map, may be generated from these measurements indicating a height of the substrate as a function of the position on the substrate. This height map may be used to correct the position of the substrate during transfer of the pattern on the substrate to provide an aerial image of the patterning device in a properly focused position on the substrate. It should be understood that "height" in this context refers to a dimension broadly out of the plane to the substrate (also referred to as the Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS 801 is schematically shown in **Fig. 8****.** In some embodiments, level sensor LS 801 comprises an optical system, which includes a projection unit LSP 803 and a detection unit LSD 805. Projection unit LSP 803 comprises a radiation source LSO 807 providing a beam of radiation LSB 809 that is imparted by a projection grating PGR 811 of projection unit LSP 803. Radiation source LSO 807 may be, for example, a narrowband or broadband radiation source, such as a supercontinuum light source, polarized or non-polarized, pulsed or continuous, such as a polarized or non-polarized laser beam. Radiation source LSO 807 may include a plurality of radiation sources having different colors, or wavelength ranges, such as a plurality of LEDs. Radiation source LSO 807 of level sensor LS 801 is not restricted to visible radiation, but may additionally or alternatively encompass ultraviolet (UV) or infrared (IR) radiation and any range of wavelengths suitable to reflect from a surface of a substrate.

Projection grating PGR 811 is a periodic grating comprising a periodic structure resulting in a beam of radiation BE1813 having a periodically varying intensity. Beam of radiation BE1 813 with the periodically varying intensity is directed towards a measurement location MLO 815 on a substrate W 817 having an angle of incidence ANG 819 with respect to an axis perpendicular (Z-axis) to the incident substrate surface between 0 degrees and 90 degrees, typically between 70 degrees and 80 degrees. At measurement location MLO 815, the patterned beam of radiation BE1 813 is reflected by the substrate W 817 (indicated by arrows BE2 821) and directed towards the detection unit LSD 805.

In order to determine the height level at the measurement location MLO 815, the level sensor 801 further comprises a detection system comprising a detection grating DGR 823, a detector DET 825 (e.g., any of the detectors described in the disclosed embodiments, such as detection device 240 of **Fig. 2A****,** detector 144 of **Fig. 2B****,** detector 300 of **Figs. 3A-3E****,** detector 500A of **Fig. 5A****,** etc.) and a processing unit (not shown) for processing an output signal of the detector DET 825. The detection grating DGR 823 may be identical to the projection grating PGR 811. The detector DET 825 produces a detector output signal indicative of the light received, for example indicative of the intensity of the light received, such as a photodetector, or representative of a spatial distribution of the intensity received, such as a camera. The detector DET 825 may comprise any combination of one or more detector types.

By means of triangulation techniques, the height level at the measurement location MLO 815 can be determined. The detected height level is typically related to the signal strength as measured by the detector DET 825, the signal strength having a periodicity that depends, amongst others, on the design of the projection grating PGR 811 and the (oblique) angle of incidence ANG 819.

The projection unit LSP 803 or the detection unit LSD 805 may include further optical elements, such as lenses or mirrors, along the path of the patterned beam of radiation between the projection grating PGR 811 and the detection grating DGR 823 (not shown).

In some embodiments, the detection grating DGR 823 may be omitted, and the detector DET 825 may be placed at the position where the detection grating DGR 823 is located. Such a configuration may provide a more direct detection of the image of the projection grating PGR 811.

In order to cover the surface of the substrate W 817 effectively, a level sensor LS 801 may be configured to project an array of measurement beams BE1813 onto the surface of the substrate W 817, thereby generating an array of measurement areas MLO 815 or spots covering a larger measurement range.

Various height sensors of a general type are disclosed for example in US7265364 and US7646471, both incorporated herein by reference in their entirety. A height sensor using UV radiation instead of visible or IR radiation is disclosed in US2010233600A1, incorporated by reference in its entirety. In WO2016102127A1, incorporated by reference in its entirety, a compact height sensor is described which uses a multi-element detector to detect and recognize the position of a grating image, without needing a detection grating.

A non-transitory computer readable medium may be provided that stores instructions for a processor of a controller (e.g., controller 109 of **Fig. 1****,** **Fig. 2A****,** **Fig. 2B****,** etc.) for controlling the electron beam tool or controlling detection systems (e.g., detection device 240 of **Fig. 2A****,** detector 144 of **Fig. 2B****,** detector 300 of **Figs. 3A-3E****,** detector 500A of **Fig. 5A****,** detector DET of **Fig. 8****,** etc.) of other systems and servers, consistent with embodiments in the present disclosure. These instructions may allow the one or more processors to carry out image processing, data processing, beamlet scanning, database management, graphical display, operations of a charged particle beam apparatus, or another imaging device, or the like. In some embodiments, the non-transitory computer readable medium may be provided that stores instructions for a processor to perform the steps of process 700. Common forms of non-transitory media include, for example, a floppy disk, a flexible disk, hard disk, solid state drive, magnetic tape, or any other magnetic data storage medium, a Compact Disc Read Only Memory (CD-ROM), any other optical data storage medium, any physical medium with patterns of holes, a Random Access Memory (RAM), a Programmable Read Only Memory (PROM), and Erasable Programmable Read Only Memory (EPROM), a FLASH-EPROM or any other flash memory, Non-Volatile Random Access Memory (NVRAM), a cache, a register, any other memory chip or cartridge, and networked versions of the same.

It will be appreciated that the embodiments of the present disclosure are not limited to the exact construction that has been described above and illustrated in the accompanying drawings, and that various modifications and changes may be made without departing from the scope thereof. The invention is defined by the appended claims.

## Claims

1. A detector (500A) comprising:
a plurality of detection elements (420a-420e) configured to generate an electrical signal in response to a particle being incident on a detection element of the plurality of detection elements;
a plurality of current sources (425a-425e) configured to drive a current in response to the electrical signal, outputs of the plurality of current sources being connected to enable combining current output by the plurality of current sources to create a combined current, the plurality of current sources being connected to respective ones of the plurality of detection elements; and
an analog-to-digital converter (435) configured to convert the combined current to a digital value that is indicative of the electrical signals output by the plurality of detection elements.

2. The detector (500A) of claim 1, wherein the plurality of detection elements (420a-420e) are configured to generate an electrical signal in response to a charged particle being incident on a detection element of the plurality of detection elements.

3. The detector (500A) of claim 1, wherein the plurality of detection elements (420a-420e) are configured to generate an electrical signal in response to a photon being incident on a detection element of the plurality of detection elements.

4. The detector (500A) of claim 1, wherein the plurality of detection elements (420a-420e) are further configured to determine a value associated with the corresponding current based on the generated electrical signal.

5. The detector (500A) of claim 4, wherein the value is an integer that represents of a number of charged particles or photons detected.

6. The detector (500A) of claim 1, wherein converting the combined current to a digital value comprises determining a number of particles being incident on the plurality of detection elements (420a-420e) based on a resistance and a voltage of the plurality of detection elements.

7. The detector (500A) of claim 6, further comprising a resistor coupled to the plurality of current sources, wherein the resistance corresponds to the resistor.

8. The detector (500A) of claim 7, wherein the voltage is measured over the resistor.

9. The detector (500A) of claim 1, wherein the plurality of detection elements (420a-420e) comprises greater than 1,000 detection elements and the plurality of current sources comprises greater than 1,000 current sources.

10. The detector (500A) of claim 1, wherein the plurality of detection elements (420a-420e) is a first group of detection elements (5110).

11. The detector (500A) of claim 10, further comprising a second group of detection elements (5210) configured to generate an electrical signal in response to a particle being incident on a detection element of the second group of detection elements (5210), and
the second group of detection elements (5210) having corresponding current sources configured to drive a current in response to the electrical signal generated by a detection element of the second group of detection elements.

12. The detector (500A) of claim 11, wherein the current sources corresponding to the second group of detection elements (5210) is configured to be connected in parallel to create the combined current.

13. The detector (500A) of claim 11, wherein converting the combined current to a digital value comprises determining a number of particles being incident on the plurality of detection elements based on a first resistance and a first voltage of the first group of detection elements and a second resistance and a second voltage of the second group of sensing elements.

14. A non-transitory computer readable medium including a set of instructions that is executable by one or more processors of an apparatus comprising a radiation source and a detector of any of claims 1-13, to cause the apparatus to perform a method comprising
directing a particle to a plurality of detection elements (420a-420e) that are configured to generate an electrical signal in response to the particle being incident on a detection element of the plurality of detection elements;
driving, via a plurality of current sources (425a-425e), a current in response to the electrical signal, outputs of the plurality of current sources being connected to enable combining current output by the plurality of current sources to create a combined current, the plurality of current sources being connected to respective ones of the plurality of detection elements; and
converting, via an analog-to-digital converter (435), the combined current to a digital value that is indicative of the electrical signals output by the plurality of detection elements.

15. A system for particle counting, comprising:
the detector according to any one of claims 1 to 13;
a discriminator configured to output a first value when a particle is detected to be incident on the detection element (420a-420e) and output a second value when no particle is detected to be incident on a detector element (420a-420e);
a corresponding current source (425a-425e) configured to drive a current when the first value is outputted; and
wherein the analog-to-digital converter (435) is configured to determine a number of particles incident on the plurality of detection elements based on a combined driven current of the plurality of current sources.

## Patentansprüche

1. Ein Detektor (500A), der Folgendes beinhaltet:
eine Vielzahl von Detektionselementen (420a-420e), die konfiguriert sind, um als Reaktion auf das Einfallen eines Teilchen auf ein Detektionselement der Vielzahl von Detektionselementen ein elektrisches Signal zu generieren;
eine Vielzahl von Stromquellen (425a-425e), die konfiguriert sind, um als Reaktion auf das elektrische Signal einen Strom zu treiben, wobei Ausgänge der Vielzahl von Stromquellen verbunden sind, um das Kombinieren des von der Vielzahl von Stromquellen ausgegebenen Stroms zu ermöglichen, um einen kombinierten Strom zu erzeugen, wobei die Vielzahl von Stromquellen mit jeweiligen der Vielzahl von Detektionselementen verbunden sind; und
einen Analog-Digital-Wandler (435), der konfiguriert ist, um den kombinierten Strom in einen digitalen Wert umzuwandeln, der für die von der Vielzahl von Detektionselementen ausgegebenen elektrischen Signale indikativ ist.

2. Detektor (500A) gemäß Anspruch 1, wobei die Vielzahl von Detektionselementen (420a-420e) konfiguriert ist, um als Reaktion auf das Einfallen eines Ladungsteilchens auf ein Detektionselement der Vielzahl von Detektionselementen ein elektrisches Signal zu generieren.

3. Detektor (500A) gemäß Anspruch 1, wobei die Vielzahl von Detektionselementen (420a-420e) konfiguriert ist, um als Reaktion auf das Einfallen eines Photons auf ein Detektionselement der Vielzahl von Detektionselementen ein elektrisches Signal zu generieren.

4. Detektor (500A) gemäß Anspruch 1, wobei die Vielzahl von Detektionselementen (420a-420e) ferner konfiguriert ist, um auf der Basis des generierten elektrischen Signals einen mit dem entsprechenden Strom assoziierten Wert zu bestimmen.

5. Detektor (500A) gemäß Anspruch 4, wobei der Wert eine ganze Zahl ist, die eine Anzahl von detektierten Ladungsteilchen oder Photonen darstellt.

6. Detektor (500A) gemäß Anspruch 1, wobei das Umwandeln des kombinierten Stroms in einen digitalen Wert das Bestimmen einer Anzahl von auf die Vielzahl von Detektionselementen (420a-420e) einfallenden Teilchen auf der Basis eines Widerstands und einer Spannung der Vielzahl von Detektionselementen beinhaltet.

7. Detektor (500A) gemäß Anspruch 6, der ferner ein mit der Vielzahl von Stromquellen gekoppeltes Widerstandsbauelement beinhaltet, wobei der Widerstand dem Widerstandsbauelement entspricht.

8. Detektor (500A) gemäß Anspruch 7, wobei die Spannung über das Widerstandsbauelement gemessen wird.

9. Detektor (500A) gemäß Anspruch 1, wobei die Vielzahl von Detektionselementen (420a-420e) mehr als 1000 Detektionselemente beinhaltet und die Vielzahl von Stromquellen mehr als 1000 Stromquellen beinhaltet.

10. Detektor (500A) gemäß Anspruch 1, wobei die Vielzahl von Detektionselementen (420a-420e) eine erste Gruppe von Detektionselementen (5110) ist.

11. Detektor (500A) gemäß Anspruch 10, der ferner eine zweite Gruppe von Detektionselementen (5210) beinhaltet, die konfiguriert sind, um als Reaktion auf das Einfallen eines Teilchens auf ein Detektionselement der zweiten Gruppe von Detektionselementen (5210) ein elektrisches Signal zu generieren, und
wobei die zweite Gruppe von Detektionselementen (5210) entsprechende Stromquellen aufweist, die konfiguriert sind, um als Reaktion auf das von einem Detektionselement der zweiten Gruppe von Detektionselementen generierte elektrische Signal einen Strom zu treiben.

12. Detektor (500A) gemäß Anspruch 11, wobei die Stromquellen, die der zweiten Gruppe von Detektionselementen (5210) entsprechen, konfiguriert sind, um parallel geschaltet zu sein, um den kombinierten Strom zu erzeugen.

13. Detektor (500A) gemäß Anspruch 11, wobei das Umwandeln des kombinierten Stroms in einen digitalen Wert das Bestimmen einer Anzahl von auf die Vielzahl von Detektionselementen einfallenden Teilchen auf der Basis eines ersten Widerstands und einer ersten Spannung der ersten Gruppe von Detektionselementen und eines zweiten Widerstands und einer zweiten Spannung der zweiten Gruppe von Erfassungselementen beinhaltet.

14. Ein nichttransitorisches computerlesbares Medium, das einen Satz Anweisungen umfasst, die von einem oder mehreren Prozessoren eines Geräts, das eine Strahlungsquelle und einen Detektor gemäß einem der Ansprüche 1-13 beinhaltet, ausgeführt werden können, um zu bewirken, dass das Gerät ein Verfahren durchführt, das Folgendes beinhaltet:
Lenken eines Teilchens auf eine Vielzahl von Detektionselementen (420a-420e), die konfiguriert sind, um als Reaktion auf das Einfallen des Teilchen auf ein Detektionselement der Vielzahl von Detektionselementen ein elektrisches Signal zu generieren;
Treiben, über eine Vielzahl von Stromquellen (425a-425e), eines Stroms als Reaktion auf das elektrische Signal, wobei Ausgänge der Vielzahl von Stromquellen verbunden sind, um das Kombinieren des von der Vielzahl von Stromquellen ausgegebenen Stroms zu ermöglichen, um einen kombinierten Strom zu erzeugen, wobei die Vielzahl von Stromquellen mit jeweiligen der Vielzahl von Detektionselementen verbunden sind; und
Umwandeln, über einen Analog-Digital-Wandler (435), des kombinierten Stroms in einen digitalen Wert, der für die von der Vielzahl von Detektionselementen ausgegebenen elektrischen Signale indikativ ist.

15. Ein System für eine Teilchenzählung, das Folgendes beinhaltet:
den Detektor gemäß einem der Ansprüche 1 bis 13;
einen Diskriminator, der konfiguriert ist, um einen ersten Wert auszugeben, wenn das Einfallen eines Teilchens auf das Detektionselement (420a-420e) detektiert wird, und einen zweiten Wert auszugeben, wenn kein Einfallen eines Teilchens auf ein Detektorelement (420a-420e) detektiert wird;
eine entsprechende Stromquelle (425a-425e), die konfiguriert ist, um einen Strom zu treiben, wenn der erste Wert ausgegeben wird; und
wobei der Analog-Digital-Wandler (435) konfiguriert ist, um eine Anzahl von auf die Vielzahl von Detektionselementen einfallenden Teilchen auf der Basis eines kombinierten getriebenen Stroms der Vielzahl von Stromquellen zu bestimmen.

## Revendications

1. Un détecteur (500A) comprenant :
une pluralité d'éléments de détection (420a à 420e) configurés pour générer un signal électrique en réponse au fait qu'une particule est incidente sur un élément de détection de la pluralité d'éléments de détection ;
une pluralité de sources de courant (425a à 425e) configurées pour émettre un courant en réponse au signal électrique, des sorties de la pluralité de sources de courant étant raccordées pour permettre de combiner du courant sorti par la pluralité de sources de courant afin de créer un courant combiné, la pluralité de sources de courant étant raccordées à des éléments respectifs de la pluralité d'éléments de détection ; et
un convertisseur analogique-numérique (435) configuré pour convertir le courant combiné en une valeur numérique qui est indicative des signaux électriques sortis par la pluralité d'éléments de détection.

2. Le détecteur (500A) de la revendication 1, dans lequel la pluralité d'éléments de détection (420a à 420e) sont configurés pour générer un signal électrique en réponse au fait qu'une particule chargée est incidente sur un élément de détection de la pluralité d'éléments de détection.

3. Le détecteur (500A) de la revendication 1, dans lequel la pluralité d'éléments de détection (420a à 420e) sont configurés pour générer un signal électrique en réponse au fait qu'un photon est incident sur un élément de détection de la pluralité d'éléments de détection.

4. Le détecteur (500A) de la revendication 1, dans lequel la pluralité d'éléments de détection (420a à 420e) sont en outre configurés pour déterminer une valeur associée au courant correspondant sur la base du signal électrique généré.

5. Le détecteur (500A) de la revendication 4, dans lequel la valeur est un entier qui est représentatif d'un nombre de particules chargées ou de photons détecté.

6. Le détecteur (500A) de la revendication 1, dans lequel le fait de convertir le courant combiné en une valeur numérique comprend le fait de déterminer un nombre de particules qui est incident sur la pluralité d'éléments de détection (420a à 420e) sur la base d'une résistance et d'une tension de la pluralité d'éléments de détection.

7. Le détecteur (500A) de la revendication 6, comprenant en outre un composant résistif couplé à la pluralité de sources de courant, dans lequel la résistance correspond au composant résistif.

8. Le détecteur (500A) de la revendication 7, dans lequel la tension est mesurée sur le composant résistif.

9. Le détecteur (500A) de la revendication 1, dans lequel la pluralité d'éléments de détection (420a à 420e) comprend plus de 1 000 éléments de détection et la pluralité de sources de courant comprend plus de 1 000 sources de courant.

10. Le détecteur (500A) de la revendication 1, dans lequel la pluralité d'éléments de détection (420a à 420e) est un premier groupe d'éléments de détection (5110).

11. Le détecteur (500A) de la revendication 10, comprenant en outre un deuxième groupe d'éléments de détection (5210) configurés pour générer un signal électrique en réponse au fait qu'une particule est incidente sur un élément de détection du deuxième groupe d'éléments de détection (5210), et
le deuxième groupe d'éléments de détection (5210) ayant des sources de courant correspondantes configurées pour émettre un courant en réponse au signal électrique généré par un élément de détection du deuxième groupe d'éléments de détection.

12. Le détecteur (500A) de la revendication 11, dans lequel les sources de courant correspondant au deuxième groupe d'éléments de détection (5210) sont configurées pour être raccordées en parallèle afin de créer le courant combiné.

13. Le détecteur (500A) de la revendication 11, dans lequel le fait de convertir le courant combiné en une valeur numérique comprend le fait de déterminer un nombre de particules qui est incident sur la pluralité d'éléments de détection sur la base d'une première résistance et d'une première tension du premier groupe d'éléments de détection et d'une deuxième résistance et d'une deuxième tension du deuxième groupe d'éléments capteurs.

14. Un support lisible par ordinateur non transitoire incluant un ensemble d'instructions qui est exécutable par un ou plusieurs processeurs d'un appareil comprenant une source de rayonnement et un détecteur de n'importe lesquelles des revendications 1 à 13, afin d'amener l'appareil à mettre en œuvre un procédé comprenant :
le fait de diriger une particule vers une pluralité d'éléments de détection (420a à 420e) qui sont configurés pour générer un signal électrique en réponse au fait que la particule est incidente sur un élément de détection de la pluralité d'éléments de détection ;
le fait d'émettre, par le biais d'une pluralité de sources de courant (425a à 425e), un courant en réponse au signal électrique, des sorties de la pluralité de sources de courant étant raccordées pour permettre de combiner du courant sorti par la pluralité de sources de courant afin de créer un courant combiné, la pluralité de sources de courant étant raccordées à des éléments respectifs de la pluralité d'éléments de détection ; et
le fait de convertir, par le biais d'un convertisseur analogique-numérique (435), le courant combiné en une valeur numérique qui est indicative des signaux électriques sortis par la pluralité d'éléments de détection.

15. Un système destiné au comptage de particules, comprenant :
le détecteur selon n'importe laquelle des revendications 1 à 13 ;
un discriminateur configuré pour sortir une première valeur lorsqu'il est détecté une particule qui est incidente sur l'élément de détection (420a à 420e) et pour sortir une deuxième valeur lorsqu'il n'est détecté aucune particule qui est incidente sur un élément détecteur (420a à 420e) ;
une source de courant correspondante (425a à 425e) configurée pour émettre un courant lorsque la première valeur est sortie ; et
dans lequel le convertisseur analogique-numérique (435) est configuré pour déterminer un nombre de particules incident sur la pluralité d'éléments de détection sur la base d'un courant émis combiné de la pluralité de sources de courant.
